(19) Europäisches Patentamt
European Patent Office
Office européen des brevets

(11) EP 1 107 610 A1

(12) # EUROPEAN PATENT APPLICATION
published in accordance with Art. 158(3) EPC

(43) Date of publication:
**13.06.2001 Bulletin 2001/24**

(21) Application number: **00903963.7**

(22) Date of filing: **16.02.2000**

(51) Int Cl.7: **H04N 7/50**, H04N 5/232

(86) International application number:
**PCT/JP00/00848**

(87) International publication number:
**WO 00/78053 (21.12.2000 Gazette 2000/51)**

(84) Designated Contracting States:
**AT BE CH CY DE DK ES FI FR GB GR IE IT LI LU MC NL PT SE**

(30) Priority: **14.06.1999 JP 16715699**

(71) Applicant: **NIKON CORPORATION**
**Tokyo 100-0005 (JP)**

(72) Inventor: **KUNIBA, Hideyasu Nikon Corporation**
**Tokyo 100-1005 (JP)**

(74) Representative: **Viering, Jentschura & Partner**
**Postfach 22 14 43**
**80504 München (DE)**

(54) **COMPRESSION ENCODING METHOD, RECORDED MEDIUM ON WHICH COMPRESSION ENCODING PROGRAM IS RECORDED, AND IMAGING DEVICE**

(57) The present invention narrows down the compression parameters using the conditions at image capturing of the image data, and executes trial compression using these compression parameters. The "statistical relationship between the compression parameters and the code volume" are prepared with limiting the image capturing conditions, and these statistical relationships are selectively used according to the image capturing conditions of the compression target, so as to estimate the compression parameters accurately. Also estimation error correction processing is determined for each image capturing condition, and these correction processings are selectively used according to the image capturing conditions of the compression target. Also the standard code volume allocation distributions (e.g. quantization table before scale factor multiplication) of the frequency domain for each image capturing condition are provided based on a subjective evaluation, and are selectively used according to the image capturing conditions of the compression target.

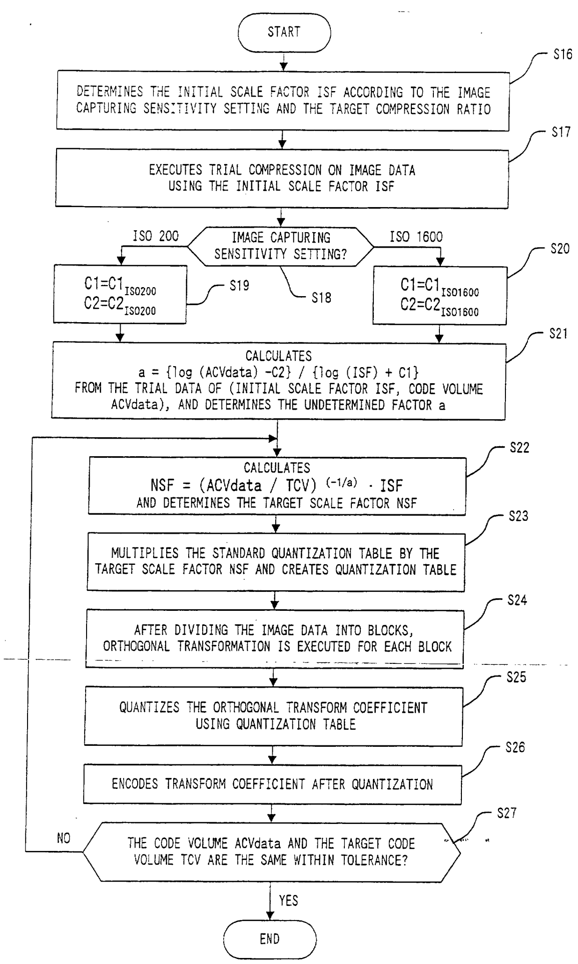


Fig. 7

EP 1 107 610 A1

## Description

### TECHNICAL FIELD

The present invention relates to a compression coding method, a recording medium recording compression-coding program, and a camera device. The present invention is more particularly a technology to compress-code image data properly by effectively using image capturing conditions (setup conditions when image data is captured or conditions of image capturing environment) of the image data. According to the compression coding method of the present invention, compression parameters can be appropriately and accurately estimated, the estimation errors of compression parameters caused by image capturing conditions can be strictly modified, the noise of the image data can be less outstanding, and image quality deterioration can be controlled.

### BACKGROUND ART

In electronic cameras and computers, compressing encoding (e.g. JPEG compression) is generally performed on image data so as to efficiently record the image data on a recording medium.
A typical JPEG compression procedure is shown in the following (1) - (4).

(1) Image data is broken down into about 8 x 8 pixels of pixel blocks. Such an orthogonal transformation as DCT conversion (Discrete Cosine Transform) is performed on these pixel blocks in order to transform the image data into spatial frequency components.

(2) As a standard to determine the code volume allocation distribution in a frequency domain, a standard quantization table, where the scales of quantization for about 8 x 8 spatial frequency components are defined, is prepared. This standard quantization table is multiplied by the scale factor SF, and the quantization table to determine the code volume allocation distribution in an actually used frequency domain is created.

(3) Using the quantization table created above, the transform coefficient after DCT transformation is quantized.

(4) Encoding, such as variable-length encoding and run length encoding, is performed on the data after quantization.

When the above mentioned procedure is taken, code volume after compression differs greatly depending on the respective differences of the image data. So in general JPEG compression, the value of the scale factor is adjusted while trial compression is performed for a plurality of times, so that the final code volume comes within a desired range.
In the document related to the present patent application, adjustable elements which influence the size of code volume in the processing steps of compression coding, such as the above mentioned scale factor, are generically called the "compression parameters".
Generally, in image data, spatial frequency components, the noise level and other features change depending on the camera setting and the photographing environment at image capturing. However, in conventional compression coding methods, the same compression coding processing is performed on image data captured under different image capturing conditions. Therefore, for image data captured under special image capturing conditions, general compression coding is not very effective, and a trial compression have to be repeated many times until the target code volume is achieved.
Also, in image data captured under special image capturing conditions, which has a special spatial frequency distribution of noise, noise tends to be outstanding after encoding, and image quality deterioration tends to be conspicuous.

### DISCLOSURE OF THE INVENTION

It is an object of the present invention to perfectly compress-code image data in the compression coding processing of image data by effectively using conditions when image data was captured.
In particular, it is an object of the present invention according to Claim 1 to Claim 4 to compress-code image data to a desired code volume quickly by effectively using conditions when the image data was captured.
It is an object of the present invention according to Claim 5 to flexibly change the compression allocation on the spatial frequency domain by effectively using conditions when the image data was captured.
It is an object of the present invention according to Claim 6 to Claim 9 to specifically present variations of the image capturing conditions that are effective to optimize the compression coding method.

It is an object of the present invention according to Claim 10 to provide a recording medium recording a compression-coding program to implement the compression coding method according to one of Claims 1 to 9 on a computer.

The content of the present invention will now be described.

(Invention according to Claim 1)

The invention according to Claim 1 is a compression coding method comprising: a trial step of compressing-coding the image data using compression parameters for trial; a parameter estimation step of estimating the compression parameters to compress said image data to a target code volume based on said image data compression result in said trial step; and a compression step of compressing-coding said image data using the compression parameters estimated in said parameter estimation step, wherein said trial step is for obtaining the image capturing conditions of said image data and changing said compression parameters for trial according to said image capturing conditions or classification of the image capturing conditions.

The inventor of the present application discovered that the standard compression parameters to achieve the target code volume (e.g. white circles shown in Fig. 4, Fig. 5 and Fig. 11) change according to the capturing conditions of the image data. So, if the capturing conditions of the image data are known, standard compression parameters can be accurately narrowed down.

In the trial step of the invention according to Claim 1, the compression parameters for trial are changed according to the image capturing conditions. At this time, the standard compression parameters obtained from the image capturing conditions can be selected as the compression parameters for trial. In this case, it is highly possible to start a trial compression from the compression parameters that are closer to the accurate solution. Therefore, the number of times of trials until reaching the target code volume is decreased, and the processing time required for compression coding can be efficiently decreased.

The result of the trial compression obtained from the compression parameters near the accurate solution accurately reflects the relationship between the compression parameters near the accurate solution and the code volume. Therefore, in the parameter estimation step, accurate compression parameters can be estimated based on this accurate trial result.

In other words, in the compression coding method according to Claim 1, appropriate compression parameters based on the image capturing conditions are selected and used as the compression parameters for trial. In this case, it is highly possible to start trial compression using compression parameters near the accurate solution, and the compression parameters can be appropriately and accurately estimated.

(Invention according to Claim 2)

The invention according to Claim 2 is a compression coding method comprising: a trial step of compressing-coding the image data using the compression parameters for trial; a parameter estimation step of estimating the compression parameters to compress said image data to a target code volume by fitting said image data compression result into said trial step to "a statistical relationship between the compression parameters and the code volume" obtained by compressing-coding plural test images in advance as a trial; and a compression step of compressing-coding said image data using the compression parameters estimated in said parameter estimation step, wherein said parameter estimation step is for preparing said statistical relationship for each image capturing condition or classification of image capturing conditions, and selectively using said statistical relationship according to said image data capturing condition.

In the parameter estimation step of the present invention according to Claim 2, a statistical relationship is prepared for each variation of the image capturing conditions. Since generating groups (population) are limited by the image capturing conditions in such a statistical relationship, a dispersion of statistical data is minimal and reliability becomes quite high.

Also in this parameter estimation step, such highly reliable statistical relationships are selectively used depending on the image capturing conditions of the compression target. Therefore, compression parameters can be estimated based on an accurate and appropriate statistical relationship, and the accuracy of the parameter estimation further improves.

In other words, in the case of the compression coding method according to Claim 2, the "statistical relationship between the compression parameters and the code volume" is prepared for each image capturing condition. Therefore, the statistical relationship is accurate because it reflects the features of the image capturing conditions, which allows estimating compression parameters accurately.

(Invention according to Claim 3)

The invention according to Claim 3 is a compression coding method comprising: a trial step of compressing-coding image data orthogonal transformation using the compression parameters for trial; a parameter estimation step of estimating the compression parameters to compress said image data to a target volume based on said image data compression result in said trial step, and a compression step of compressing-coding said image data using the compression parameters estimated in said parameter estimation step, wherein said compression step is for obtaining the image capturing conditions of said image data and modifying the compression parameters estimated in said parameter estimation step according to said image capturing conditions or classification of the image capturing conditions.

In the compression step according to Claim 3, the compression parameters determined in the parameter estimation step are modified . Such modification processing can be determined by a statistical analysis of the "compress ion parameters determined in the parameter estimation step" and the "accurate solution values of the compression parameters experimentally determined", for example.

Normally, in such a modification processing, processing content changes depending on the image capturing conditions of the image data. So, in the above mentioned compression step, modification processing is prepared for each variation of the image capturing conditions, and modification processing is selected and used according to the image capturing conditions of the image data. As a result, compression parameters can be accurately modified according to the features of the image data depending on each image capturing condition.

In other words, in the case of the compression coding method according to Claim 3, the compression parameters estimated from the result of the trial compression are modified according to the image capturing conditions. Therefore, the estimation errors of the compression parameters due to the image capturing conditions can be accurately modified.

(Invention according to Claim 4)

The invention according to Claim 4 is A compression coding method comprising: a trial step of quantizing and encoding the image data after orthogonal transformation using a code volume allocation distribution in a frequency domain which is determined by multiplying the standard code volume allocation distribution in the frequency domain by a scale factor for trial, and determining a code volume of said image data; a parameter estimation step of estimating a scale factor for compressing said image data to a target code volume based on the code volume of said image data determined in said trial step; and a compression step of quantizing and encoding said image data after orthogonal transformation using a code volume allocation distribution in a frequency domain determined by multiplying the standard code volume allocation distribution in said frequency domain by the scale factor estimated in said parameter estimation step, wherein said trial step and said compression step are for preparing the plural of standard code volume allocation distribution in said frequency domain for each image capturing condition or classification of the image capturing conditions, and selectively using the standard code volume allocation distribution in said frequency domain according to the image capturing condition of said image data.

In this description, "the code volume allocation distribution in a frequency domain" refers to the compression degree of information determined for a frequency component or for each classification thereof in the frequency domain, and "the standard code volume allocation distribution in a frequency domain" refers to the standard value thereof. Typically, the compression ratio for frequency classification determined by the numeric value in the quantization table, in the case of JPEG, corresponds to this standard code volume allocation distribution in a frequency domain. In the case of wavelet conversion as well, a table of quantization steps for each sub-band can be provided, and the code volume allocation distribution in a frequency domain can be controlled by the table.

It is also possible to encode sequentially from the MSB and to the LSB of the transform coefficient, and in this case, weight can be changed for each frequency component. For example, when the low frequency component is a, medium frequency component is b, and high frequency component is c, if each bit is encoded (least significant bit is 0 and most significant bit is 7) while weight is changed at every 2 bits, and encoding is stopped when capacity reaches a predetermined value, then the encoding sequence is a7 → a6 → a5 → b7 → a4 → b6 → a3 → b5 → c7 → a2 → b4 → c6 → a1 → b3 → c5, and if encoding is stopped at this point, 7 bits are encoded for the low frequency component a, 5 bits for the medium frequency component b, and 3 bits for the high frequency component c, that is, the information compression ratio can be changed for each frequency component.

In the compression coding method according to Claim 4, the standard code volume allocation distribution is selectively used in the frequency domain depending on the image capturing conditions of the compression target.

Therefore, in the present invention, the code volume allocation distribution can be freely changed between the low spatial frequency component and the high spatial frequency component according to the change in the features of the image data depending on the image capturing conditions. A typical method to selectively use the standard code volume allocation distribution in the frequency domain depending on the image capturing conditions of the compression target is a method of using different quantization tables depending on the image capturing conditions of the compression target.

Particularly in the compression coding method according to Claim 4, the standard code volume allocation distribution in the frequency domain is selectively used from the stage of the trial step.

Therefore, trial compression can be executed under the same conditions as the compression step, and the compression parameters can be estimated more accurately.

In other words , in the compression coding method according to Claim 4, the standard code volume allocation distribution (e.g. quantization table before multiplying by the scale factor) in the frequency domain is changed according to the image capturing conditions of the image data. Therefore, the compression allocation of each spatial frequency component can be freely changed according to the features of the image data depending on the image capturing conditions, the noise of the image data can be less outstanding, and the image quality deterioration can be controlled.

(Invention according to Claim 5)

The invention according to Claim 5 is a compression coding method comprising: an orthogonal transformation step of performing orthogonal transformation on the image data and determining transform coefficients; a quantization step of quantizing the transform coefficients determined in said orthogonal transformation step according to the code volume allocation distribution in the frequency domain; and an encoding step of encoding the transform coefficients quantized in said quantization step, wherein said quantization step is for changing the compression allocation in the frequency domain by changing the code volume allocation distribution in said frequency domain according to the image capturing condition of said image data or classification of the image capturing conditions.

In the compression coding method according to Claim 5, the code volume allocation distribution (e.g. quantization factor of the quantization table) in the frequency domain is changed depending on the image capturing conditions of the compression target. Therefore, it is possible to freely change the compression allocation between the low spatial frequency component and the high spatial frequency component according to the change in the features of the image data for each image capturing condition. Therefore, the noise of the image data can be less outstanding and image quality deterioration can be controlled.

(Invention according to Claim 6)

The invention according to Claim 6 is the compression coding method according to one of Claim 1 to Claim 5, wherein said image capturing condition is at least one of the conditions of the image capturing sections which capture said image data, that is, image capturing sensitivity setting, signal gain, gamma correction curve, use of electronic zoom, magnification ratio of electronic zoom, shutter speed, white balance adjustment value, special image effect and tone curve setting.

In the compression coding method according to Claim 6, at least one of the following image capturing conditions is used.

- Image capturing sensitivity setting
  Under this image capturing condition, mainly the noise level of the image data changes. Therefore compression coding adapting to the change of noise level is possible.
- Signal gain
  Under this image capturing condition, mainly the noise level of the image data changes. Therefore compression coding adapting the change of noise level is possible.
- Gamma correction curve
  Under this image capturing condition, mainly the noise level and brightness tone of the image data changes. Therefore compression coding adapting to these changes is possible.
- Use of electronic zoom
  Under this image capturing condition, mainly the actual resolution of the image data changes. Therefore compression coding adapting to the change of actual resolution is possible.
- Magnification of electronic zoom
  Under this image capturing condition, mainly the actual resolution of the image data changes. Therefore compression coding adapting to the change of actual resolution is possible.
- Shutter speed
  Under this image capturing condition, mainly the blurring level of the image changes. Also, an increase in the storage time in the image capturing section increases the noise level of the image data. Therefore compression coding adapting to the change of blurring level and noise level is possible.
- White balance adjustment value

From this image capturing condition, mainly the image capturing location and image capturing time of the image data can be estimated. Therefore compression coding adapting to the change of the image capturing location and time is possible.

- Special image effects
  From this image capturing condition, the features of the image data depending on the special image effects can be estimated.
  Therefore compression coding adapting to an individual special image effect is possible.
- Tone
  Under this image capturing condition, mainly the contrast and details of the image data changes. Therefore compression coding adapting to these changes is possible.

(Invention according to Claim 7)

The invention according to Claim 7 is the compression coding method according to one of Claim 1 to Claim 5, wherein said image capturing condition is at least one of the conditions ofphotographing environment in which said image data was captured, that is, use of a strobe light, use of slow synchronization strobe light, use of daylight synchronization strobe light, metering value, multi-pattern metering value, light distribution status of object, vertical/horizontal positioning, camera motion which causes a blurred photograph and temperature.

In the compression coding method according to Claim 7, at least one of the following image capturing conditions is used.

- Use of strobe light
  Under this image capturing condition, mainly the degree of generation of black smears in a background and image blurring changes. Therefore compression coding adapting to these changes is possible.
- Use of slow synchronization strobe light
  Under this image capturing condition, black smears are generated less frequently than in the case of using only a strobe light. Therefore compression coding adapting to this change is possible.
- Use of daylight synchronization strobe light
  Under this image capturing condition, black smears are generated with much less frequency compared with the case of using only a strobe light. Therefore compression coding adapting to this change is possible.
- Metering value
  From this image capturing condition, the features of image data, which are different depending on the metering value, can be estimated. Therefore compression coding adapting to the change of image data depending on the metering value is possible.
- Multi-pattern metering value
  From this image capturing condition, mainly the light distribution status of an object can be estimated. Therefore compression coding adapting to the change of image data depending on the light distribution status is possible.
- Light distribution status of object
  From this image capturing condition, the light distribution status of an object is known. Therefore compression coding adapting to the change of image data depending on the light distribution status is possible.
- Vertical/horizontal positioning
  Under this image capturing condition, mainly the screen configuration changes. Therefore compression coding adapting to the change of screen configuration is possible.
- Camera blurring level
  Under this image capturing condition, mainly the blurring level of the image changes. Therefore compression coding adapting to the change of blurring level is possible.
- Temperature
  Under this image capturing condition, mainly the noise level of the image data changes. Therefore compression coding adapting to the change of the noise level is possible.

(Invention according to Claim 8)

The invention according to Claim 8 is the compression coding method according to one of Claim 1 to Claim 4, wherein said image capturing condition is at least one of the conditions of the lens which capture said image data, that is, use of a macro-shot, image magnification, depth of field, aperture value, focal length, angle of view, object distance, focusing status, multi-point focusing status and type of lens.

In the compression coding method according to Claim 8, at least one of the following image capturing conditions is used, so the following effect can be obtained respectively.

- Use of macro-shot
  From this image capturing condition, the change of image data depending on the use of macro-shot can be estimated. Therefore compression coding adapting to this change is possible.
- Image magnification
  From this image capturing condition, the change of image data depending on the image magnification can be estimated. Therefore compression coding adapting to this change is possible.
- Depth of field
  Under this image capturing condition, mainly the out of focus level in the screen changes. Therefore compression coding adapting to the change of out of focus level is possible.
- Aperture value
  Under this image capturing condition, mainly the out of focus level in the screen changes. Therefore compression coding adapting to the change of out of focus level is possible.
- Focal length
  Under this image capturing condition, mainly the depth of field, image magnification and composition (depth perception) changes. Therefore compression coding adapting to these changes is possible.
- Angle of view
  Under this image capturing condition, mainly the depth of field, image magnification and composition (depth perception) changes. Therefore compression coding adapting to these changes is possible .
- Object distance
  Under this image capturing condition, mainly the depth of field, image magnification and composition (depth perception) changes. Therefore compression coding adapting to these changes is possible.
- Focusing status
  From this image capturing condition, mainly the out of focus level in the screen is known. Therefore compression coding adapting to the change of the out of focus level is possible.
- Multi-point focusing status
  From this image capturing condition, the out of focus area and the out of focus position in the screen can be estimated. Therefore compression coding adapting to these changes is possible.
- Type of photographing lens
  From this image capturing condition, the change of image data depending on the type of photographing lens is known. Therefore compression coding adapting to this change is possible.

(Invention according to Claim 9)

The invention according to Claim 9 is the compression coding method according to Claim 5, wherein said image capturing condition is at least one of the conditions of the lens which capture said image data, that is, image magnification, focusing status and multi-point focusing status.
In the compression coding method according to Claim 9, at least one of the following image capturing conditions is used, so the following effect can be obtained respectively.

- Image magnification
  From this image capturing condition, the change of image data depending on the image magnification can be estimated. Therefore compression coding adapting to this change is possible.
- Focusing status
  From this image capturing condition, mainly the out of focus level in the screen is known. Therefore compression coding adapting to the change of the out of focus level is possible.
- Multi-point focusing status
  From this image capturing condition, the out of focus area and the out of focus position in the screen can be estimated . Therefore compression coding adapting to these changes is possible.

(Invention according to Claim 10)

In the recording medium according to Claim 10, a compression coding program for a computer to execute the compression coding method according to one of Claim 1 to Claim 9 is recorded.
In the recording medium according to Claim 10, a compression coding program is recorded. By executing this compression coding program using a computer, the compression coding method according to one of Claim 1 to Claim 9 can be implemented on a computer. In Claim 10, "machine readable" means that reading by a computer or an electronic circuit is possible.

(Invention according to Claim 11)

The invention according to Claim 11 is a camera device comprising the recording medium according to Claim 10.

The number of pixels of such camera devices as an electronic camera and digital video camera is dramatically increasing, and electronic cameras having a number of pixels exceeding 200 mega-pixels are on the market. In these camera devices, it is critical to compress and store image information in the image memory thereof. In the present invention, the recording medium according to Claim 10 is built-in, and captured image information is compressed and stored in the recording medium using the program therein, so a large volume of information can be stored in the attached recording medium.

BRIEF DESCRIPTION OF THE DRAWINGS

Fig. 1 is a block diagram depicting a configuration of an electronic camera;

Fig. 2 is a flow chart depicting a procedure of the compression coding in the first embodiment;

Fig. 3 is a data table of the initial scale factor ISF;

Fig. 4 is a graph depicting the relationship between the scale factor and the code volume on the test image captured under the (ISO 200) and (no strobe light) image capturing conditions;

Fig. 5 is a graph depicting the relationship between the scale factor and the code volume on the test image captured under ISO 1600 image capturing conditions;

Fig. 6 is a graph plotting the undetermined factors a and b;

Fig. 7 is a flow chart depicting the compression coding method according to the first embodiment;

Fig. 8 is a graph depicting the correlation between the target scale factor estimated from one trial compression and the accurate scale factor (measured value) to obtain a 1/4 compression ratio;

Fig. 9 is a flow chart depicting a procedure of preparing compressing encoding according to the second embodiment;

Fig . 10 is a flowchart depicting the compression coding method according to the second embodiment;

Fig. 11 is a graph depicting the relationship between the scale factor and the code volume on the test image captured using a strobe light;

Fig. 12 is a data table of the initial scale factor ISF;

Fig. 13 is a graph depicting the correlation between the target scale factor estimated from one trial compression and the accurate scale factor (measured value) to obtain a 1/4 compression ratio; Fig. 14 is a flow chart depicting a procedure of preparing compression coding according to the third embodiment;

Fig. 15 is a diagram depicting an example of the standard quantization table corresponding to the image capturing sensitivity setting; and

Fig. 16 is a flow chart depicting the compression coding method according to the third embodiment.

BEST MODE FOR CARRYING OUT THE INVENTION

The best modes for carrying out the present invention will now be described with reference to the accompanying drawings, but needless to say, the content therein does not restrict the scope of the present invention.

<First embodiment>

Fig. 1 is a block diagram depicting a configuration of an electronic camera 10.

In Fig. 1, a photographing lens 11 and a strobe light emitting section 12 are installed on the electronic camera 10. In the image space of the photographing lens 11, an image sensing device 13 is disposed. The image data generated in the image sensing device 13 is processed via the signal processing section 15, the A/D conversion section 16 and the image processing section 17 sequentially, and is then provided to the compression processing section 18 as digital image data.

The compression processing section 18 compresses-codes this image data and outputs it to the recording section 19. The recording section 19 records the compressed image data to a recording medium (not illustrated) such as a memory card.

The electronic camera 10 comprises a control section 21 which further comprises a microprocessor, a multi-photometry section 22 which performs multi-pattern photometry, a focus detection section to detect focus (or distance measuring section to measure distance) 23, and control buttons 24 for camera operation and mode setting.

The control section 21 obtains detection information from the multi-photometry section 22, the focus detection section (or distance measurement section) 23 and the control buttons 24. Based on this detection information, the control section 21 judges the image capturing conditions (e.g. image capturing sensitivity setting) of the image data. The control section 21 controls the above mentioned photographing lens 11, the strobe light emission section 12, the image sensing device 13, the signal processing section 15, the A/D conversion section 16 and the image processing section 17 respectively, so as to execute an image capturing operation suitable for the image capturing condition.

The compression processing section 18 obtains this image capturing condition from the control section 21. The compression processing section 18 uses this image capturing condition as valid information to execute optimum compression coding. Operation of this compression processing section 18, which is the feature of the present invention, will now be described in detail.

(Preparation for compression coding)

Fig. 2 is a flow chart depicting the preparation procedure of compression coding. Such a preparation is normally performed by the developer of the compression processing section 18. The user of the electronic camera 10 may execute preparation by selecting specific image data which is frequently captured.

Using Fig. 2, the preparation procedure will now be described. To make explanation easier, here it is assumed that the individual who executes preparation is a developer.

At first, the developer photographs as many types of objects and scenes as possible while changing the image capturing sensitivity setting of the electronic camera 10. The developer executes DCT conversion on the non-compressed image data collected in this way (hereafter called "test image") (Fig. 2, S11).

Then the developer collects many data on (scale factor SF, code volume ACVdata) for each test image for which DCT conversion completes, by repeatedly executing quanatization and encoding while gradually changing the value of the scale factor SF (Fig. 2, S12).

Fig. 4 is a graph plotting the data determined for the test images with image capturing sensitivity ISO 200. Fig. 5 is a graph plotting the data determined for the test images with image capturing sensitivity ISO 1600.

As Fig. 4 and Fig. 5 show, a clear difference is seen in the data distribution on the graph depending on the difference of image capturing sensitivity. Such a difference in data distribution is probably due to the difference in noise level which depends on the image capturing sensitivity setting.

Here the developer selects a scale factor SF which seems to be close to a standard to achieve the 1/4, 1/8 and 1/16 target compression ratios respectively from the graphs in Fig. 4 and Fig. 5 (white circles shown in Fig. 4 and Fig. 5), and sets them as the initial scale factor ISF. An example of a method to select the scale factor SF close to a standard is the average value of the points when each graph in Fig. 4 and Fig. 5, which crosses each target compression ratio, is determined.

Fig. 3 is a data table on the initial scale factors ISF selected in this way. The developer stores such a data table in the erasable memory area in the compression processing section 18 (Fig. 2, S13).

Then the developer performs regression analysis on the data shown in Fig. 4 and Fig. 5, and determines the undetermined factors a and b which satisfy the following formula for each test image (Fig. 2, S14).

$$\log(\text{ACVdata}) = a \cdot \log(\text{SF}) + b \cdot\cdot \qquad [1]$$

The regression analysis here is performed by limiting the range of the scale factor to 0.1 - 1.0, so as to increase the degree of consistency between the regression formula and the data.

Fig. 6 is a graph where the undetermined factors a and b determined as above are plotted with abscissa a and ordinate b. As Fig. 6 shows, the distribution of the undetermined factors a and b is classified into two depending on the setting of the image capturing sensitivity.

Here the developer performs regression analysis on the undetermined factors a and b for each image capturing sensitivity setting, and determines the factors $Cl_{ISO200}$, $C2_{ISO200}$, $Cl_{ISO1600}$ and $C2_{ISO1600}$ which satisfy the formulas [2] and [3].

$$\text{For ISO 200: } b = C1_{ISO200} \cdot a + C2_{ISO200} \cdot\cdot \qquad [2]$$

$$\text{For ISO 1600: } b = C1_{ISO1600} \cdot a + C2_{ISO1600} \cdot\cdot \qquad [3]$$

The developer stores these factors in the erasable memory area in the compression processing section 18 when these factors correspond with the image capturing sensitivity setting (Fig. 2, S15).

With the above procedure, preparation of compression coding is completed.

(Description of compression coding method)

The specific procedure of compression encryption will now be described.

Fig. 7 is a flow chart depicting the compression coding method executed by the compression processing section 18. The compression processing section 18 obtains the image data capturing condition (here the image capturing sensitivity setting) from the control section 21. Based on the image capturing sensitivity setting and the target compression ratio, the compression processing section 18 searches the data table (Fig. 3) created in the above preparation, based on the image capturing sensitivity setting and the target compression ratio, and determines the initial scale factor ISF (corresponding to the compression parameters for trial) (Fig. 7, S16).

The compression processing section 18 multiplies the standard quantization table by the initial scale factor ISF determined as above in order to create the initial quantization table to be used for trial compression. The compression processing section 18 executes a known JPEG compression procedure using this initial quantization table, and executes trial compression of the image data (Fig. 7, S17).

Then the compression processing section 18 selects the C1 and C2 factors which match with the image capturing sensitivity setting of the image data from the factors $C1_{ISO200,}$ $C2_{ISO200}$, $C1_{ISO1600}$ and $C2_{ISO1600}$ prepared in the preparation step (Fig. 7, S18, S19, S20).

Then the compression processing section 18 calculates

$$a = \{\log (ACVdata) - C2\} / \{\log (ISF) + C1\} \cdot \cdot \qquad [4]$$

substituting the factors C1 and C2, the code volume after trial compression ACVdata, and the initial scale factor ISF for the above formula, and determines the undetermined factor a (Fig. 7, S21).

This [formula 4] is a formula derived from [formula 1] - [formula 3], and represents the statistical relationship between the scale factor and the code volume.

Then the compression processing section 18 calculates

$$NSF = (ACVdata/TCV)^{(-1/a)} \cdot ISF \cdot \cdot \qquad [5]$$

using the target code volume TCV (= code volume of image data x target compression ratio), and determines an appropriate target scale factor NSF to obtain the target code volume TCV (Fig. 7, S22).

[Formula 5] is the formula when the (target scale factor NSF, target code volume TCV). is substituted in [formula 1] - [formula 4], and the undetermined factor b is deleted.

Then the compression processing section 18 multiplies the standard quanatization table by the target scale factor NSF to create the quantization table (Fig. 7, S23).

The compression processing section 18 executes a known JPEG compression procedure (S24 - S26) using this quantization table, in order to compress the image data.

Then the compression processing section 18 judges whether the code volume after image compression (this is new ACVdata) is within the tolerance of the target code volume TCV (Fig. 7, S27).

If outside the tolerance (NO at S27 in Fig. 7), the compression processing section 18 sets the NSF determined in Step S22 as a new ISF, and the code volume after image compression ACVdata obtained in Step S27 as ACVdata returns operation back to Step S22, updates the target scale factor NSF, and repeats image compression again. If within the tolerance (YES at S27 in Fig. 7 ), the compression processing section 18 ends operation, regarding that the desired image compression has been achieved.

(Effect of first embodiment)

As described above, in the first embodiment, an initial scale factor as close as possible to the accurate solution is selected based on the information of the image capturing sensitivity setting. Therefore, it is possible to efficiently decrease the number of times of trial compressions until reaching the target code volume.

Since the initial scale factor is close to the accurate solution, the result of the trial compression accurately reflects the relationship between the scale factor and the code volume near the accurate solution. Therefore the target scale factor can be estimated more accurately.

Also in the first embodiment, a statistical relationship (factors C1 and C2 to define the statistical relationship) is prepared for each image capturing sensitivity setting. Therefore the reliability of an individual statistical relationship is sufficiently high. As a result, from this point of view as well, the target scale factor can be estimated even more accurately.

Fig. 8 is a graph plotting the relationship between the target scale factor determined in one trial compression and an accurate scale factor to obtain a 1/4 compression ratio (measured value) for many image data. The ◊ symbol in Fig. 8 shows a case when the target scale factor is calculated without classifying the image capturing sensitivity setting, and the black triangle symbol shows a case when the target scale factor is calculated with classifying the image capturing sensitivity setting.

As Fig. 8 clearly shows, the case with classifying the image capturing sensitivity setting (black triangle symbol) is closer to the accurate solution line (dotted line in Fig. 8), that is, a more accurate target scale factor.

<Second embodiment>

The second embodiment of the present invention will now be described. Since the configuration of the electronic camera in the second embodiment is the same as the first embodiment (Fig. 1), description thereof is omitted here.

Now operation of the compression processing section 18, which is the feature of the second embodiment, will be described.

(Description of compression coding)

Fig. 9 is a flow chart depicting the procedure of preparing compression coding according to the second embodiment. Using Fig. 9, the preparation procedure will be described. To make explanation easier, here it is assumed that the individual who executes the preparation is a developer.

At first, the developer photographs as many objects and scenes as possible with an electronic camera 10 while switching between use/non-use of a strobe light. The developer executes DCT conversion on the non-compressed image data collected in this way (hereafter called "test image") (Fig. 9, S31).

Then the developer repeatedly executes quanatization and encoding on each test image, for which DCT conversion completes, while gradually changing the value of the scale factor SF, and collects many data on (scale factor SF, code volume ACVdata) (Fig. 9, S32).

Fig. 11 is a graph plotting the data on (scale factor SF, code volume ACVdata) for test images for which a strobe light was used. Fig. 4, on the other hand, is a graph plotting the data on (scale factor SF, code volume ACVdata) for test images for which a strobe light was not used.

As Fig. 4 and Fig. 11 show, the data distribution on the graph differs depending on whether a strobe light was used or not. This is probably because the background part smears in black and the image information volume decreases when a strobe light is used.

Here the developer selects a scale factor SF which is close to the standard to achieve 1/4, 1/8 and 1/16 target compression ratios respectively from the graphs in Fig. 4 and Fig. 11 (white circles shown in Fig. 4 and Fig. 11), and sets them as the initial scale factor ISF.

Fig. 12 is a data table on the initial scale factors ISF selected in this way. The developer stores such a data table in the erasable memory area in the compression processing section 18 (Fig. 9, S33).

Then the developer performs regression analysis on the data shown in Fig. 4, and determines the undetermined factors a and b which satisfy the following formula (Fig. 9, S34)

$$\log(\mathrm{ACVdata}) = a \bullet \log(\mathrm{SF}) + b \bullet \bullet \qquad [1]$$

The developer performs regression analysis on the undetermined factors a and b which were determined in this way, and determines the factors C1 and C2 which satisfy the following formula.

$$b = C1 \bullet a + C2 \bullet \bullet \qquad [6]$$

The developer stores these factors in the erasable memory area in the compression processing section 18 (Fig. 9, S35).

Then the developer estimates the target scale factor for the test image when a strobe light is used using the factors C1 and C2.

The symbol ◊ in Fig. 13 shows a case when the target scale factor (before modification) is estimated in this way is plotted. In this case, the target scale factor (◊ symbol) before modification distributes positions which slightly deviate from the accurate solution line (dotted line in Fig. 13).

So the developer performs regression analysis on the target scale factor (◊ symbol) before modification, and determines the correction formula to correct the formula of the regression line of the "target scale factor before modification" to a formula of the accurate solution line. The developer stores this correction formula in the erasable memory area in the compression processing section 18 (Fig. 9, S36).

With the above procedure, preparation of compression coding is completed.

(Description of compression coding method)

A specific compression coding method will now be described.

Fig. 10 is a flow chart depicting the compression coding method executed by the compression processing section 18.

At first, the compression processing section 18 obtains the image data capturing condition (in this case when a strobe light is used) from the control section 21. Based on the use of a strobe light and the target compression ratio, the compression processing section 18 searches the data table (Fig. 12) created during preparation, and determines the initial scale factor ISF (Fig. 10, S37).

The compression processing section 18 multiplies the standard quantization table by the initial scale factor ISF determined in this way, and creates an initial quantization table to be used for trial compression. The compression processing section 18 executes a known JPEG compression procedure using this initial quantization table, and executes the trial compression of the image data (Fig. 10, S38).

Then the compression processing section 18 calculates

$$a = \{\log (ACVdata) - C2\} / \{\log (ISF) + C1\} \bullet \bullet \qquad [7]$$

substituting the factors C1 and C2 prepared in the preparation step, the code volume ACVdata after the trial compression and the initial scale factor ISF for the above formula, and determines the undetermined factor a (Fig. 10, S39).

Then the compression processing section 18 calculates

$$NSF = (ACVdata / TCV)^{(-1/a)} \bullet ISF \bullet \bullet \qquad [5]$$

using the target code volume TCV (= code volume of image data x target compression ratio), and determines an appropriate target scale factor NSF to obtain the target code volume TCV (Fig. 10, S40).

Here the compression processing section 18 judges whether the image data was captured using a strobe light (Fig. 10, S41).

In the case of image data captured without using a strobe light, the compression processing section 18 judges that modification processing is unnecessary, and transits operation to Step S43.

In the case of image data captured using a strobe light, on the other hand, the compression processing section 18 corrects the target scale factor NSF using the correction formula determined in the preparation (Fig. 10, S42), then transits operation to Step S43.

Then the compression processing section 18 compresses the image data using the target scale factor NSF (Fig. 10, 43).

Here the compression processing section 18 judges the code volume after image compression (this is a new ACVdata) is within the tolerance of the target code volume TCV (Fig. 10, 44).

If outside the tolerance (NO at 44 in Fig. 10), the compression processing section 18 sets the NSF determined in Step S40 as a new ISF and the code volume after image compression ACVdata obtained in Step S.44 as ACVdata, returns operation back to Step S40, updates the target scale factor NSF, and repeats image compression again. If within the tolerance (YES at 44 in Fig. 10), the compression processing section 18 ends operation regarding that the desired image compression was achieved.

(Effect of second embodiment)

As described above, in the second embodiment, an initial scale factor close to the accurate solution is selected depending on whether a strobe light is used. Therefore, it is possible to efficiently decrease the number of times of trial compressions until reaching the target code volume.

Since the initial scale factor is close to the accurate solution, the result of the trial compression accurately reflects the relationship between the scale factor and the code volume near the accurate solution. Therefore the target scale factor can be estimated more accurately.

Also in the second embodiment, the target scale factor is modified for image data for which a strobe light was used, so the target scale factor can be determined more accurately.

The black triangle symbols in Fig. 13 show the plotted target scale factors after modification. As Fig. 13 shows, the target scale factor after modification (black triangle symbol) is closer to the accurate solution line (dotted line in Fig. 8) than the target scale factor before modification (◊ symbol), that is, the target scale factor is accurately modified.

Another embodiment will now be described.

<Third embodiment>

The third embodiment of the present invention will now be described. Since the configuration of the electronic camera in the third embodiment is the same as the first embodiment (Fig. 1), description thereof is omitted here.

Now operation of the compression processing section 18, which is the feature of the third embodiment, will be described.

(Preparation of compression coding)

Fig. 14 is a flow chart depicting the preparation procedure of compression coding according to the third embodiment.

The feature of preparation in the third embodiment is that the standard quantization table is selectively used according to the image capturing sensitivity setting of the test image (Fig. 14, S12a).

Fig. 15 (a) shows a standard quantization table dedicated to ISO 200, which is used at this time. Fig. 15(b) shows a standard quantization table dedicated to ISO 1600. These standard quantization tables are determined for each image capturing condition based on the image quality evaluation of the decoded images.

Since the other operations shown in Fig. 14 (S11, S13 - S15) are the same as the first embodiment (Fig. 2), description thereof is omitted here.

(Description of compression coding method)

Fig. 16 is a flow chart depicting the compression coding method according to the third embodiment. The features of the operations in the third embodiment are the following (1) and (2).

(1) The compression processing section 18 selects a standard quantization table according to the image capturing sensitivity setting for the image data (Fig. 16, S16a).
(2) The compression processing section 18 executes trial compression (Fig. 16, S17) and final compression (Fig. 16, S23 - S26) using the selected standard quantization table.

Since the other operations shown in Fig. 16 are the same as the first embodiment (Fig. 7), description thereof is omitted here.

(Effect of third embodiment)

The above mentioned standard quantization table dedicated to ISO 1600 is set such that a quantization factor of the high spatial frequency component is rather large. Therefore the high frequency noise component, which tends to be generated when the image capturing sensitivity setting is high, can be effectively suppressed, and an unnecessary increase in code volume by noise can be prevented.

The standard quantization table dedicated to ISO 200, on the other hand, is set such that the quantization factor of the high spatial frequency component is relatively small. Therefore the loss of high frequency micro-signals and mosquito noise can be controlled, and the deterioration of image quality can be minimized.

<Supplement to embodiment>

In the above embodiments, a case when the present invention is applied to an electronic camera was described. The advantage in this case is that the image capturing conditions of the image data can be directly obtained from the electronic camera. However, the embodiments of the present invention are not limited to an electronic camera.

For example, the present invention may be applied to a scanner. In this case, scanned image data can be compressed-coded accurately by effectively using the image capturing conditions (e.g. scan speed, scan method, scan size, type of scanning target, type of illumination) of the scanner.

Also the operation procedure in Fig. 7, Fig. 10 and Fig. 16 may be recorded in a recording medium as a compression coding program (as seen in Claim 10). In this case, the compression coding method of the present invention can be executed on a computer.

In the above embodiments, a case when a JPEG system is used as the image compression system was described, but the present invention is not restricted by this. For example, an MPEG system may be used as the image compression system. Needless to say, the present invention may be applied to the compression of moving images.

Also in the above embodiments, a case when a scale factor is used as a compression parameter is used was described, but [the present invention] is not restricted by this . Any adjustable element which influences the code volume in the process of compression coding processing can be generally used as a compression parameter.

For example, the code volume can be changed when the compression allocation on the spatial frequency domain is changed by changing an individual quantization factor in the quantization table. Therefore, the compression allocation (e.g. individual quantization factor in the quantization table) on the spatial frequency domain may be a compression parameter.

Also in the above embodiments, a procedure to estimate a scale factor by at least a one time trial compression was described. In this case, the estimation accuracy of the target scale factor can be increased to an extremely high level by at least a one time trial compression, by effectively using the information on image capturing conditions. The present invention, however, is not restricted by this, and the present invention can be applied to a known compression parameter estimation procedure where the trial compression is repeated a plurality of times.

In the above embodiments, a case when the "image capturing sensitivity setting" or the "use of a strobe light" were used as image capturing conditions was described. In particular, when the image capturing sensitivity setting is used as an image capturing condition, optimum compression coding can be executed responding to a slight change in the noise level.

However, the image capturing conditions of the present invention are not restricted by this. Generally any image capturing condition can be used if a significant (e.g. statistical) difference affects the image data, and this difference influences the compression result (e.g. code volume and image quality of decoded image). If such an image capturing condition is used, the effect of the present invention can be realized.

Also in the above embodiments, compression coding is controlled corresponding to one type of image capturing condition, but [the present invention] is not restricted by this. For example, compression coding may be controlled corresponding to a plurality of types of image capturing conditions. In this case, a more dramatically detailed classification is possible by logically combining a plurality of types of image capturing conditions, so that compression coding processing can be closely controlled.

In the above embodiments, the image capturing condition is judged based on various settings in photographing mode, but a method to obtain the image capturing condition is not restricted by this. For example, the user may judge the image capturing condition and input information by control buttons . In this case, a more detailed image capturing condition, such as the light distribution status on an object, can be obtained, and a more accurate compression coding can be executed.

The specific image capturing conditions listed in Claims 6 to 9 will now be described.

[A] Image capturing sensitivity setting, signal gain, gamma correction curve

As the image capturing sensitivity is manually or automatically set to a higher sensitivity (as the signal gain of the image capturing section is increased), brightness increases when the image is captured at night or in shade, but the noise level also increases.

As the $\gamma$ of the gamma correction curve increases, the micro-amplitude gain at the image capturing section increases and the noise level in the dark part of the screen increases.

In such image capturing conditions where the noise level increases, the following compression coding is preferable since the code volume increases as the noise increases.

- In the trial step, the compression degree of the compression parameter for trial is increased.
- In the parameter estimation step, compression parameters are estimated using the statistical relationship determined for the image data where the noise level is high.
- In the compression step, the compression parameters are modified using the modification processing determined for image data where the noise level is high.
- The standard code volume allocation distribution (e.g. standard quantization table or quantization factor) in the frequency domain is changed so that the spatial frequency component of noise is strongly suppressed.

[B] Use of electronic zoom, magnification of electronic zoom

When an electronic zoom is used or when the magnification of the electronic zoom increases, the actual resolution of the image data decreases. In this case, a loss of the high spatial frequency component of the image data occurs and the code volume decreases naturally. So when electronic zoom is used as an image capturing condition, the following compression coding is preferable.

- In the trial step, the compression degree of the compression parameter for trial is decreased.
- In the parameter estimation step, the compression parameters are estimated using the statistical relationship determined for the image data where actual resolution is low, as mentioned above.
- In the compression step, the compression parameters are modified using the modification processing determined for image data where actual resolution is low, as mentioned above.
- The standard code volume allocation distribution (e.g. standard quantization table or quantization factor) in the frequency domain is changed so that the quantization factor for the lost high spatial frequency component is increased.

[C] Shutter speed

As the shutter speed decreases, the image stretches due to a slight movement of hands and a blurring of the object. In this case, a loss of the high spatial frequency component occurs and the code volume becomes relatively low. So when a low speed shutter, where the loss of high spatial frequency component is conspicuous, is an image capturing condition, the following compression coding is preferable.

- In the trial step, the compression degree of the compression parameter for trial is decreased.
- In the parameter estimation step, the compression parameters are estimated using the statistical relationship determined for the image data where a low speed shutter was used.
- In the compression step, the compression parameters are modified using the modification processing determined for image data where a low speed shutter was used.
- Based on a subjective evaluation of image quality, the standard code volume allocation distribution (e.g. standard quantization table or allocation of quantization factor) in the frequency domain suitable for an image where a low speed shutter was used is determined. According to the image capturing conditions of a low speed shutter, the standard code volume allocation distribution (e.g. standard quantization table or allocation of quantization factor) in this frequency domain is used.

The noise component increases as the shutter speed decreases and the CCD storage time increases (in particular, when the noise in the high spatial frequency component increases).
When the change of such a noise level cannot be ignored, a feature where these functions overlap statistically appears at each shutter speed. (For example, in the case of a 1/100 second or less high speed shutter, a signal component change due to an image stretch rarely occurs, and only a change in the noise component clearly occurs. However, in the case of 1/10 second or more low speed shutter, a signal component change due to an image stretch appears conspicuously, and the change of the noise component can be ignored.)
Compression coding may be performed corresponding to such features of image data at each shutter speed. In this case, it is preferable to execute compression coding using a tripod.

[D] White balance adjustment volume

It is possible to roughly group photographing location, photographing time, hue and saturation by the white balance adjustment values of the image capturing section, such as by outdoor photographing/indoor photographing, fair weather photographing/cloudy weather photographing, and sunset photographing/day time photographing. By grouping image data depending on the white balance adjustment values in this way, the following compression coding is possible.

- In the trial step, the standard compression parameters predetermined for the image data within a same group can be used as compression parameters for trial.
- In the parameter estimation step, the compression parameters are estimated using the statistical relationship predetermined for the image data within a same group.
- In the compression step, the compression parameters are modified using the modification processing determined for image data within a same group.

- Based on the subjective evaluation of image quality, the standard code volume allocation distribution (e.g. standard quantization table or allocation of quantization factor) in an appropriate frequency domain for each group is determined. At compression coding, the standard code volume allocation distribution (standard quantization table or allocation of quantization factor) in the frequency domain is selectively used.

[E] Special image effect

Based on the type of special image effect (monochrome processing, emboss effect, bleed effect, high key effect, low key effect, chroma key processing, noise adding effect, and mosaic effect), the features of the image data can be roughly grouped. By grouping the image data depending on the type of special image effect, the following compression coding is possible.

- In the trial step, the standard compression parameters predetermined for the image data within a same group can be used as the compression parameters for trial.
- In the parameter estimation step, the compression parameters are estimated using the statistical relationship predetermined for the image data within a same group.
- In the compression step, the compression parameters are modified using the modification processing determined for the image data within a same group.
- Based on the subjective evaluation of image quality, the standard code volume allocation distribution (e.g. standard quantization table or allocation of quantization factor) in an appropriate frequency domain for each group is determined. At compression coding, the standard code volume allocation distribution (standard quantization table or allocation of quantization factor) in the frequency domain is selectively used.

[F] Tone

Depending on the degree of tone modification, contrast, noise level, detail, hue, and saturation change. So the features of the image data can be roughly grouped based on the image capturing condition of tone. By grouping the image data depending on the image capturing condition of tone in this way, the following compression coding is possible.

- In the trial step, the standard compression parameters predetermined for the image data within a same group can be used as the compression parameters for trial.
- In the parameter estimation step, the compression parameters are estimated using the statistical relationship predetermined for the image data within a same group.
- In the compression step, the compression parameters are modified using themodification processing determined for the image data within a same group.
- Based on the subjective evaluation of image quality, the standard code volume allocation distribution (e.g. standard quantization table or allocation of quantization factor) in an appropriate frequency domain for each group is determined. At compression coding, the standard code volume allocation distribution (standard quantization table or allocation of quantization factor) in the frequency domain is selectively used.

[G] Use of strobe light

If a strobe light is used, the background where the strobe light did not reach smears in black, so a loss of brightness level tends to occur in part of some areas in the screen. If a partial loss of the brightness level occurs, the information volume of image data decreases and the code volume of information data decreases. So when the use of a strobe light is an image capturing condition, the following compression coding is generally preferable.

- In the trial step, the compression degree of the compression parameter for trial is decreased.
- In the parameter estimation step, the compression parameters are estimated using the statistical relationship determined for the image data where the strobe light is used.
- In the compression step, the compression parameters are modified using the modification processing determined for the image data where the strobe light is used.
- Based on the subjective evaluation of image quality, the standard code volume allocation distribution (e.g. standard quantization table or allocation of quantization factor) in the frequency domain suitable for the image data where the strobe light was used is determined. For the image data where the strobe light was used, the standard code volume allocation distribution (e.g. standard quantization table or allocation of quantization factor) in this frequency domain is used.

[H] Use of slow synchronization strobe light

If slow synchronization strobe light is used, the background is photographed bright. So, the loss of brightness level is low compared with the case of when only a strobe light is used. Therefore, if the use of slow synchronization strobe light is an image capturing condition, it is preferable to execute compression coding separately from the image capturing conditions of simple strobe light photography.

[I] Use of daylight synchronization strobe light

If daylight synchronization strobe light is used, both the background and the object are photographed bright. So the loss of brightness level is very low compared with the case when only a strobe light is used. Therefore, if the use of daylight synchronization strobe light is an image capturing condition, it is preferable to execute compression coding separately from the image capturing conditions of simple strobe light photography.

[J] Metering value

The features of the image data can be roughly grouped based on the metering value. By grouping the image data according to the metering value, the following compression coding is possible.

- In the trial step, the standard compression parameters predetermined for the image data within a same group can be used as compression parameters for trial.
- In the parameter estimation step, the compression parameters are estimated using the statistical relationship predetermined for the image data within a same group.
- In the compression step, the compression parameters are modified using the modification processing determined for image data within a same group.
- Based on the subjective evaluation of image quality, the standard code volume allocation distribution (e.g. standard quantization table or allocation of quantization factor) in an appropriate frequency domain for each group is determined. At compression coding, the standard code volume allocation distribution (standard quantization table or allocation of quantization factor) in the frequency domain is selectively used.

[K] Multi-pattern metering value

It is possible to group the light distribution status (back light, front light) of the object. By grouping image data according to the multi-pattern metering value, the following compression coding is possible.

- In the trial step, the standard compression parameters predetermined for the image data within a same group can be used as compression parameters for trial.
- In the parameter estimation step, the compression parameters are estimated using the statistical relationship predetermined for the image data within a same group.
- In the compression step, the compression parameters are modified using the modification processing determined for image data within a same group.
- Based on the subjective evaluation of image quality, the standard code volume allocation distribution (e.g. standard quantization table or allocation of quantization factor) in an appropriate frequency domain for each group is determined. At compression coding, the standard code volume allocation distribution (standard quantization table or allocation of quantization factor) in the frequency domain is selectively used.

[L] Light distribution status of object

It is possible to roughly group the image data based on the light distribution status (e.g. back light, front light, side light, diagonal light, semi-back light) of the object. By grouping the image data according to the light distribution status, the following compression coding is possible.

- In the trial step, the standard compression parameters predetermined for the image data within a same group can be used as compression parameters for trial.
- In the parameter estimation step, the compression parameters are estimated using the statistical relationship predetermined for the image data within a same group.
- In the compression step, the compression parameters are modified using the modification processing determined for image data within a same group.

- Based on the subjective evaluation of image quality and the like, the standard code volume allocation distribution (e.g. standard quantization table or allocation of quantization factor) in an appropriate frequency domain for each group is determined. At compression coding, the standard code volume allocation distribution (standard quantization table or allocation of quantization factor) in the frequency domain is selectively used.

[M] Vertical/horizontal positioning

The screen configuration of the image data can be roughly grouped based on whether a vertical positioning (portrait mode) was used or not. By grouping the image data depending on whether a vertical positioning (portrait mode) was used or not, the following compression coding is possible.

- In the trial step, the standard compression parameters predetermined for the image data within a same group can be used as compression parameters for trial.
- In the parameter estimation step, the compression parameters are estimated using the statistical relationship predetermined for the image data within a same group.
- In the compression step, the compression parameters are modified using the modification processing determined for image data within a same group.
- Based on the subjective evaluation of image quality and the like, the standard code volume allocation distribution (e.g. standard quantization table or allocation of quantization factor) in an appropriate frequency domain for each group is determined. At compression coding, the standard code volume allocation distribution (standard quantization table or allocation of quantization factor) in the frequency domain is selectively used.

[N] Camera blurring level

As the camera blurring level increases, images tend to stretch. In this case, the loss of the high spatial frequency component of the image data occurs, and the code volume decreases naturally. Under image capturing conditions where the camera blurring level is high, the following compression coding is preferable.

- In the trial step, the compression degree of the compression parameters for trial is decreased.
- In the parameter estimation step, the compression parameters are estimated using the statistical relationship determined for the image data where the camera blurring level is high.
- In the compression step, the compression parameters are modified using the modification processing determined for the image data where the camera blurring level is high.
- Based on the subjective evaluation of the image quantity, the standard code volume allocation distribution (e.g. standard quantization table or allocation of quantization factor) in the frequency domain suitable for the image data where the camera blurring level is high is determined. Corresponding to the image capturing conditions where the camera blurring level is high, the standard code volume allocation distribution (e.g. standard quantization table or allocation of quantization factor) in this frequency domain is used.

[O] Use of macro-shot, image magnification

When high magnification photography, such as a macro-shot, is performed on an object that does not have fractal graphic features (e.g. artificial object), the actual resolution of the image data decreases. In this case, the loss of the high spatial frequency component of the image data occurs and the code volume becomes relatively small. So in the case of high magnification photography, such as a macro-shot, the following compression coding is preferable.

- In the trial step, the compression degree of the compression parameters for trial is decreased.
- In the parameter estimation step, the compression parameters are estimated using the statistical relationship determined for the low resolution image data mentioned above.
- In the compression step, the compression parameters are modified using the modification processing determined for the low resolution image data mentioned above.
- By changing the standard code volume allocation distribution (e.g. standard quantization table or allocation of quantization factor) in the frequency domain, the quantization factor for the lost high spatial frequency component is increased.

[P] Depth of field

As the depth of field increases, the out of focus level at the front and back of the object increases. In this case, a loss of the high spatial frequency component of the image data occurs, and the code volume becomes relatively small. So in the case of the image capturing condition where the depth of field is shallow, the following compression coding is preferable.

- In the trial step, the compression degree of the compression parameters for trial is decreased.
- In the parameter estimation step, the compression parameters are estimated using the statistical relationship determined for the image data where the depth of field is shallow.
- In the compression step, the compression parameters are modified using the modification processing determined for the image data where the degree of depth of field is shallow.
- Based on the subjective evaluation of the image quality, the standard code volume allocation distribution (e.g. standard quantization table or allocation of quantization factor) in the frequency domain suitable for image data where the degree of depth of field is shallow is determined. According to the image capturing conditions where the degree of depth of field is shallow, the standard code volume allocation distribution (e.g. standard quantization table or allocation of quantization factor) in this frequency domain is used.

[Q] Apertute value, focus distance, angle of view, object distance

Under the following image capturing conditions, the background part of the screen tends to be out of focus.

- Aperture value is at release side
- Focus distance of the photographing lens is long (angle of view is narrow)
- Object distance is short

If the image becomes out of focus in this way, the loss of the high spatial frequency component of the image data occurs, and the code volume of the image data becomes relatively small. So when the image capturing condition where out of focus increases is used, the following compression coding is preferable.

- In the trial step, the compression degree of the compression parameters for trial is decreased.
- In the parameter estimation step, the compression parameters are estimated using the statistical relationship determined for the image data where out of focus level is high.
- In the compression step, the compression parameters are modified using the modification processing determined for the image data where out of focus level is high.
- Based on the subjective evaluation of the image quality, the standard code volume allocation distribution (e.g. standard quantization table or allocation of quantization factor) in the frequency domain suitable for the image data where out of focus level is high is determined. Corresponding to the image capturing condition where out of focus level is high, the standard code volume allocation distribution (e.g. standard quantization table or allocation of quantization factor) in this frequency domain is used.

[R] Focusing status

Based on the focusing status obtained from a focus detection unit, the degree of out of focus of the image data can be grouped. By grouping the image data depending on the focusing status, the following compression coding is possible.

- In the trial step, the standard compression parameters predetermined for the image data within a same group can be used as compression parameters for trial.
- In the parameter estimation step, the compression parameters are estimated using the statistical relationship predetermined for the image data within a same group.
- In the compression step, the compression parameters are modified using the modification processing determined for image data within a same group.
- Based on the subjective evaluation of image quality, the standard code volume allocation distribution (e.g. standard quantization table or allocation of quantization factor) in an appropriate frequency domain for each group is determined. At compression coding, the standard code volume allocation distribution (standard quantization table or allocation of quantization factor) in the frequency domain is selectively used.

[S] Multi-point focusing status

Based on the multi-point focusing status obtained from a multi-point focus detection unit, the out of focus domain and the out of focus positions on the screen can be roughly grouped. By grouping the image data depending on the multi-point focusing status, the following compression coding is possible.

- In the trial step, the standard compression parameters predetermined for the image data within a same group can be used as compression parameters for trial.
- In the parameter estimation step, the compression parameters are estimated using the statistical relationship predetermined for the image data within a same group.
- In the compression step, the compression parameters are modified using the modification processing determined for image data within a same group.
- Based on the subjective evaluation of image quality and the like, the standard code volume allocation distribution (e.g. standard quantization table or allocation of quantization factor) in an appropriate frequency domain for each group is determined. At compression coding, the standard code volume allocation distribution (standard quantization table or allocation of quantization factor) in the frequency domain is selectively used.

[T] Type of photographing lens

Based on the type of the photographing lens, the aberration performance, spatial frequency characteristic (MTF characteristic) and degree of out of focus, etc. of the image data can be roughly grouped. By grouping the image data depending on the type of photographing lens, the following compression coding is possible.

- In the trial step, the standard compression parameters predetermined for the image data within a same group can be used as compression parameters for trial.
- In the parameter estimation step, the compression parameters are estimated using the statistical relationship predetermined for the image data within a same group.
- In the compression step, the compression parameters are modified using the modification processing determined for image data within a same group.
- Based on the subjective evaluation of image quality and the like, the standard code volume allocation distribution (e.g. standard quantization table or allocation of quantization factor) in an appropriate frequency domain for each group is determined. At compression coding, the standard code volume allocation distribution (standard quantization table or allocation of quantization factor) in the frequency domain is selectively used.

[U] Temperature

As the temperature of the image sensing device, such as CCD, increases, the noise level of the image data increases. Therefore under image capturing conditions where the temperature is high, the code volume increases as noise increases. So the following compression coding is preferable.

- In the trial step, the compression degree of the compression parameters for trial is increased.
- In the parameter estimation step, the compression parameters are estimated using the statistical relationship determined for the image data where the noise level is high.
- In the compression step, the compression parameters are modified using the modification processing determined for the image data where the noise level is high.
- By changing the standard code volume allocation distribution (e.g. standard quantization table or quantization factor) in the frequency domain, the spatial frequency component of the noise is strongly suppressed.

## INDUSTRIAL APPLICABILITY

According to the compression coding method of the present invention, compression parameters can be estimated appropriately and accurately, compression parameter estimation errors due to the image capturing conditions can be accurately modified, the noise of the image data can be suppressed, and the image quality deterioration can be controlled.

The present invention can be widely applied to equipment for storing and transmitting images, such as electronic cameras, digital video cameras, copiers and facsimiles.

## Claims

**1.** A compression coding method comprising: a trial step of compressing-coding the image data using compression parameters for trial; a parameter estimation step of estimating the compression parameters to compress said image data to a target code volume based on said image data compression result in said trial step; and a compression step of compressing-coding said image data using the compression parameters estimated in said parameter estimation step, wherein said trial step is for obtaining the image capturing conditions of said image data and changing said compression parameters for trial according to said image capturing conditions or classification of the image capturing conditions.

2. A compression coding method comprising: a trial step of compressing-coding the image data using the compression parameters for trial; a parameter estimation step of estimating the compression parameters to compress said image data to a target code volume by fitting said image data compression result into said trial step to "a statistical relationship between the compression parameters and the code volume" obtained by compressing-coding plural test images in advance as a trial; and a compression step of compressing-coding said image data using the compression parameters estimated in said parameter estimation step, wherein said parameter estimation step is for preparing said statistical relationship for each image capturing condition or classification of image capturing conditions, and selectively using said statistical relationship according to said image data capturing condition.

3. A compression coding method comprising: a trial step of compressing-coding image data orthogonal transformation using the compression parameters for trial; a parameter estimation step of estimating the compression parameters to compress said image data to a target volume based on said image data compression result in said trial step, and a compression step of compressing-coding said image data using the compression parameters estimated in said parameter estimation step, wherein said compression step is for obtaining the image capturing conditions of said image data and modifying the compression parameters estimated in said parameter estimation step according to said image capturing conditions or classification of the image capturing conditions.

4. A compression coding method comprising: a trial step of quantizing and encoding the image data after orthogonal transformation using a code volume allocation distribution in a frequency domain which is determined by multiplying the standard code volume allocation distribution in the frequency domain by a scale factor for trial, and determining a code volume of said image data; a parameter estimation step of estimating a scale factor for compressing said image data to a target code volume based on the code volume of said image data determined in said trial step; and a compression step of quantizing and encoding said image data after orthogonal transformation using a code volume allocation distribution in a frequency domain determined by multiplying the standard code volume allocation distribution in said frequency domain by the scale factor estimated in said parameter estimation step, wherein said trial step and said compression step are for preparing the plural of standard code volume allocation distribution in said frequency domain for each image capturing condition or classification of the image capturing conditions, and selectively using the standard code volume allocation distribution in said frequency domain according to the image capturing condition of said image data.

5. A compression coding method comprising: an orthogonal transformation step of performing orthogonal transformation on the image data and determining transform coefficients; a quantization step of quantizing the transform coefficients determined in said orthogonal transformation step according to the code volume allocation distribution in the frequency domain; and an encoding step of encoding the transform coefficients quantized in said quantization step, wherein said quantization step is for changing the compression allocation in the frequency domain by changing the code volume allocation distribution in said frequency domain according to the image capturing condition of said image data or classification of the image capturing conditions.

6. The compression coding method according to one of Claim 1 to Claim 5, wherein said image capturing condition is at least one of the conditions of the image capturing sections which capture said image data, that is, image capturing sensitivity setting, signal gain, gamma correction curve, use of electronic zoom, magnification ratio of electronic zoom, shutter speed, white balance adjustment value, special image effect and tone.

7. The compression coding method according to one of Claim 1 to Claim 5, wherein said image capturing condition is at least one of the conditions of photographing environment in which said image data was captured, that is, use of a strobe light, use of slow synchronization strobe light, use of daylight synchronization strobe light, metering value, multi-patternmeteringvalue, light distribution status of object, vertical/horizontal positioning, camera motion which causes a blurred photograph and temperature.

8. The compression coding method according to one of Claim 1 to Claim 4, wherein said image capturing condition is at least one of the conditions of the lens which capture said image data, that is, use of a macro-shot, image magnification, depth of field, aperture value, focal length, angle of view, object distance, focusing status, multi-point focusing status and type of lens.

**9.** The compression coding method according to Claim 5, wherein said image capturing condition is at least one of the conditions of the lens which capture said image data, that is, image magnification, focusing status and multi-point focusing status.

**10.** A mechanically readable recording medium which record a compression coding program for having a computer execute the compression coding method according to one of Claim 1 to Claim 9.

**11.** A camera device comprising the recording medium according to Claim 10.

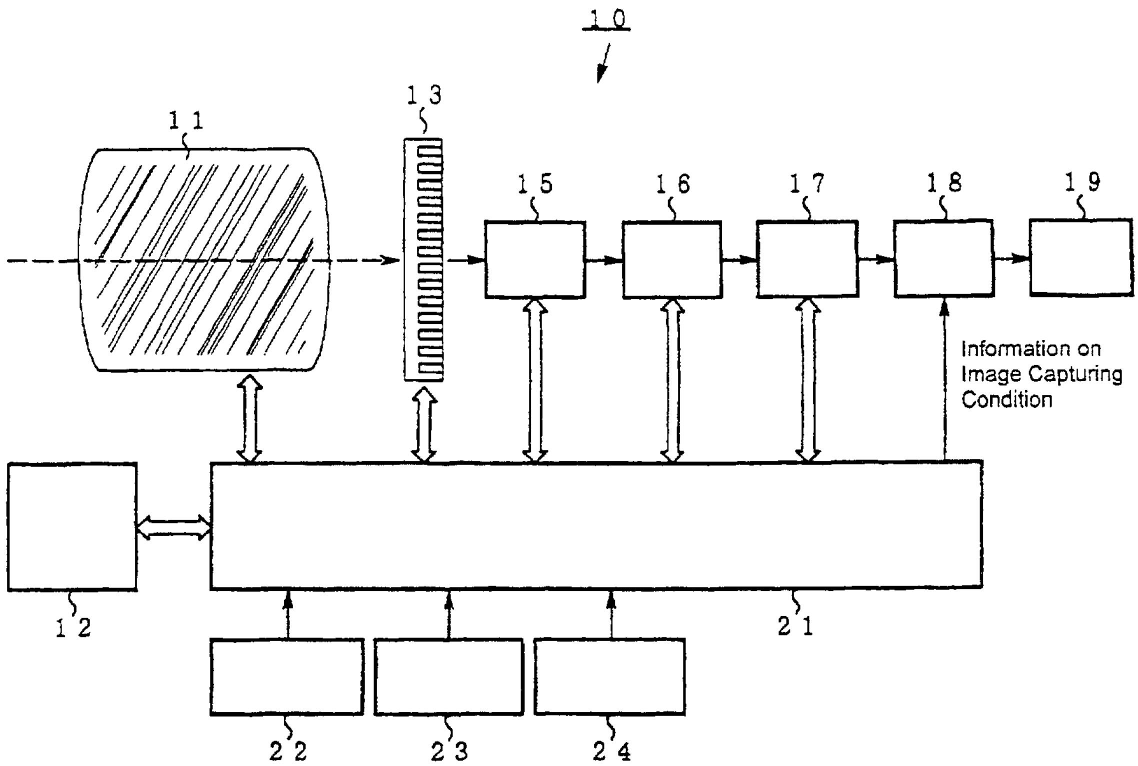


10 ELECTRONIC CAMERA
11 PHOTOGRAPHING LENS
12 STROBE LIGHT EMITTING SECTION
13 IMAGE SENSING DEVICE
15 SIGNAL PROCESSING SECTION
16 A/D CONVERSION SECTION
17 IMAGE PROCESSING SECTION
18 COMPRESSION PROCESSING SECTION
19 RECORDING SECTION
21 CONTROL SECTION
22 MULTI-PHOTOMETRY SECTION
23 FOCUS DETECTION SECTION (DISTANCE MEASURING SECTION)
24 CONTROL BUTTONS

Fig. 1

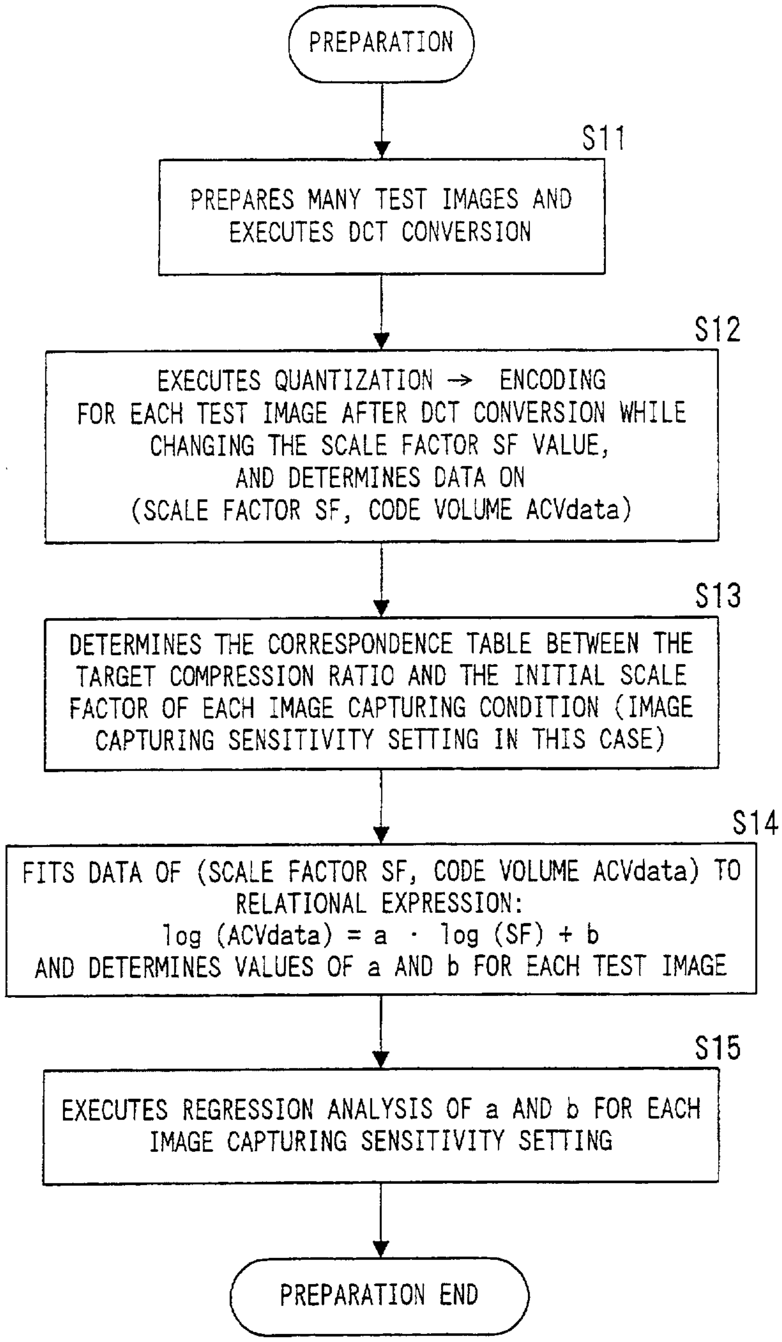
PREPARATION
S11
PREPARES MANY TEST IMAGES AND EXECUTES DCT CONVERSION
S12
EXECUTES QUANTIZATION → ENCODING FOR EACH TEST IMAGE AFTER DCT CONVERSION WHILE CHANGING THE SCALE FACTOR SF VALUE, AND DETERMINES DATA ON (SCALE FACTOR SF, CODE VOLUME ACVdata)
S13
DETERMINES THE CORRESPONDENCE TABLE BETWEEN THE TARGET COMPRESSION RATIO AND THE INITIAL SCALE FACTOR OF EACH IMAGE CAPTURING CONDITION (IMAGE CAPTURING SENSITIVITY SETTING IN THIS CASE)
S14
FITS DATA OF (SCALE FACTOR SF, CODE VOLUME ACVdata) TO RELATIONAL EXPRESSION:
log (ACVdata) = a · log (SF) + b
AND DETERMINES VALUES OF a AND b FOR EACH TEST IMAGE
S15
EXECUTES REGRESSION ANALYSIS OF a AND b FOR EACH IMAGE CAPTURING SENSITIVITY SETTING
PREPARATION END

Fig. 2

INITIAL SCALE FACTOR

| | | IMAGE CAPTURING SENSITIVITY SETTING | |
|---|---|---|---|
| | | ISO 200 | ISO 1600 |
| TARGET COMPRESSION RATIO | 1/4 | 0.1 | 0.5 |
| | 1/8 | 0.3 | 1.0 |
| | 1/16 | 0.7 | 1.5 |

Fig. 3

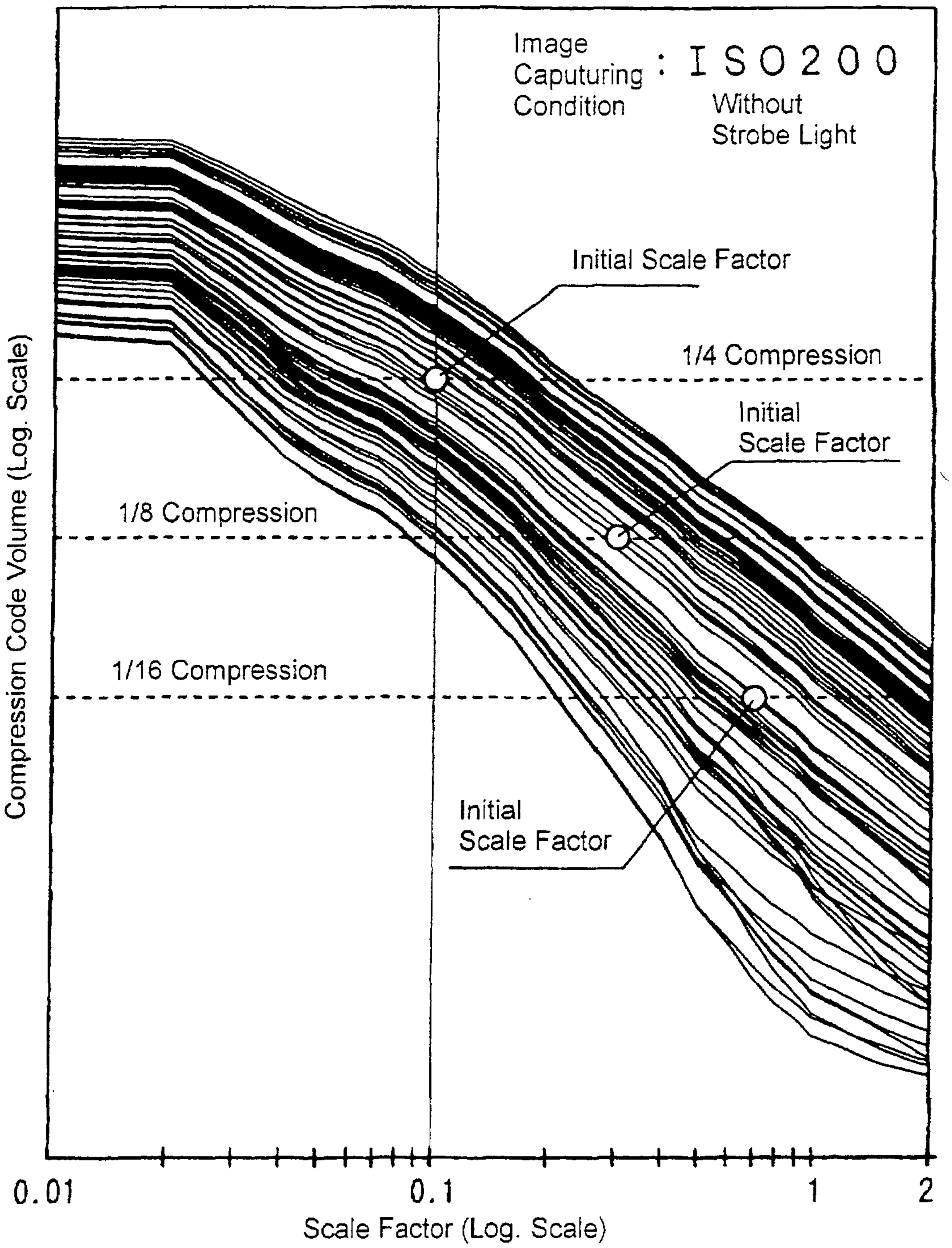
Image Caputuring Condition : ISO200 Without Strobe Light
Initial Scale Factor
1/4 Compression
Initial Scale Factor
1/8 Compression
1/16 Compression
Initial Scale Factor
Compression Code Volume (Log. Scale)
0.01
0.1
1
2
Scale Factor (Log. Scale)

Fig. 4

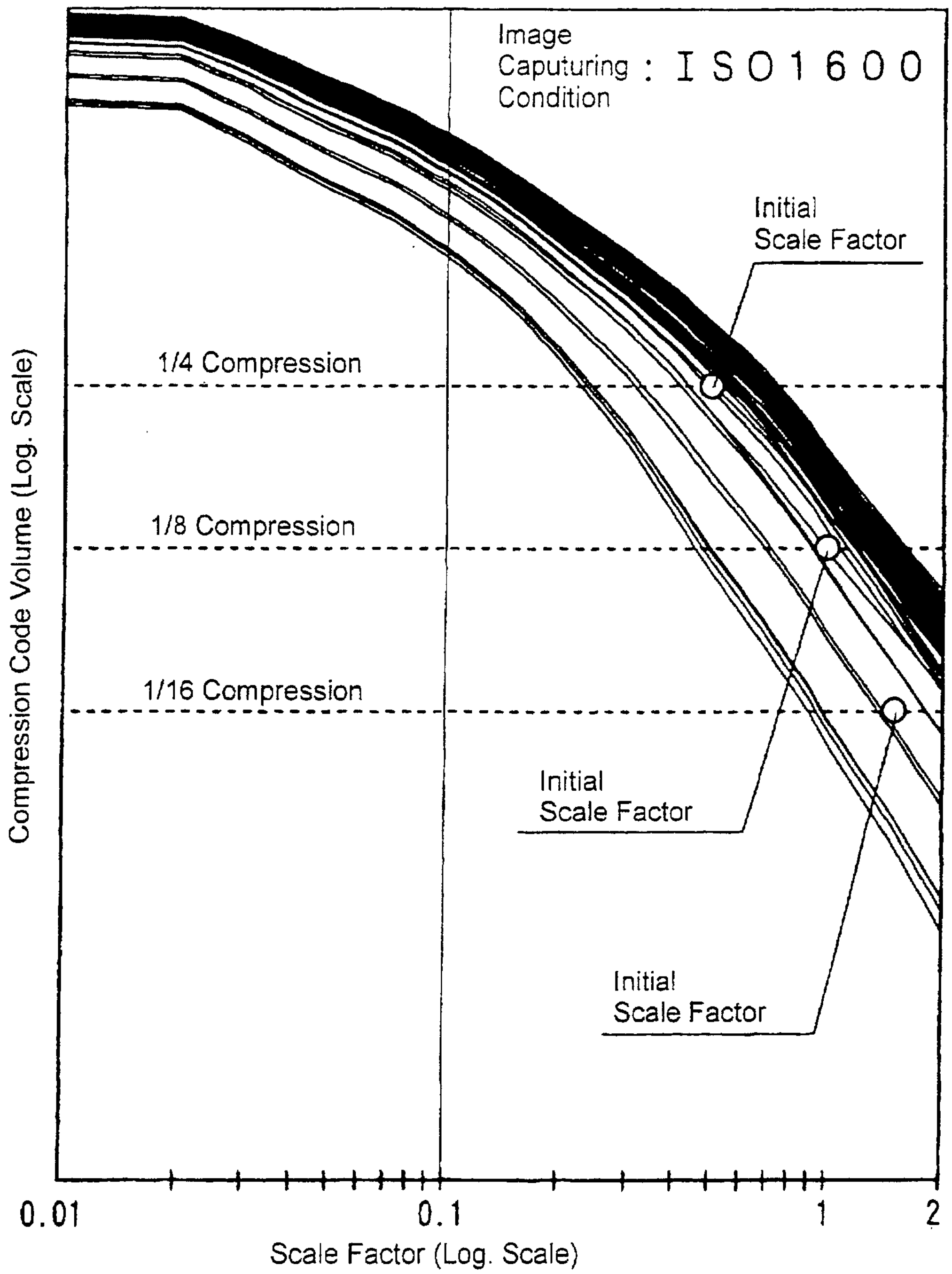
Image
Caputuring : ISO1600
Condition
Initial
Scale Factor
1/4 Compression
1/8 Compression
1/16 Compression
Initial
Scale Factor
Initial
Scale Factor
Compression Code Volume (Log. Scale)
0.01
0.1
1
2
Scale Factor (Log. Scale)

Fig. 5

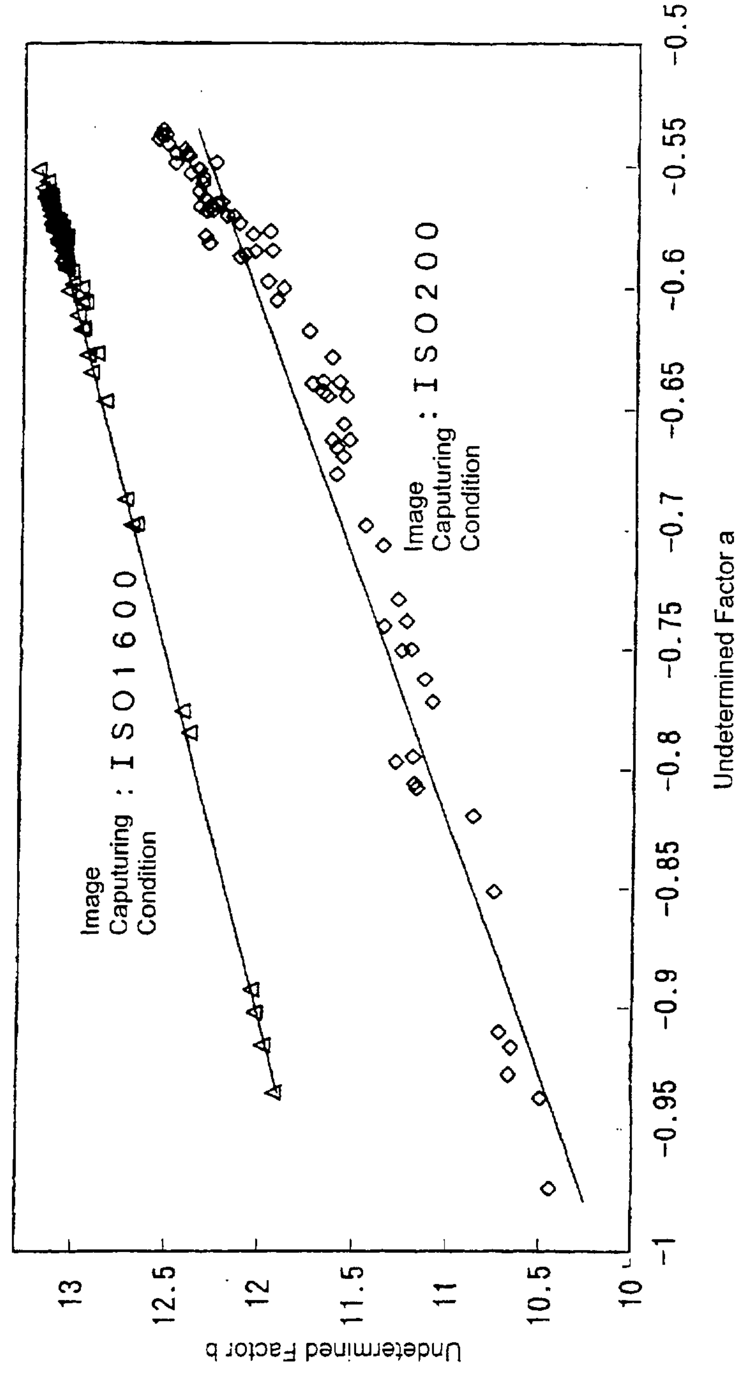
Image Caputuring Condition : ISO1600
Image Caputuring Condition : ISO200
Undetermined Factor a
Undetermined Factor b
-1
-0.95
-0.9
-0.85
-0.8
-0.75
-0.7
-0.65
-0.6
-0.55
-0.5
10
10.5
11
11.5
12
12.5
13

Fig. 6

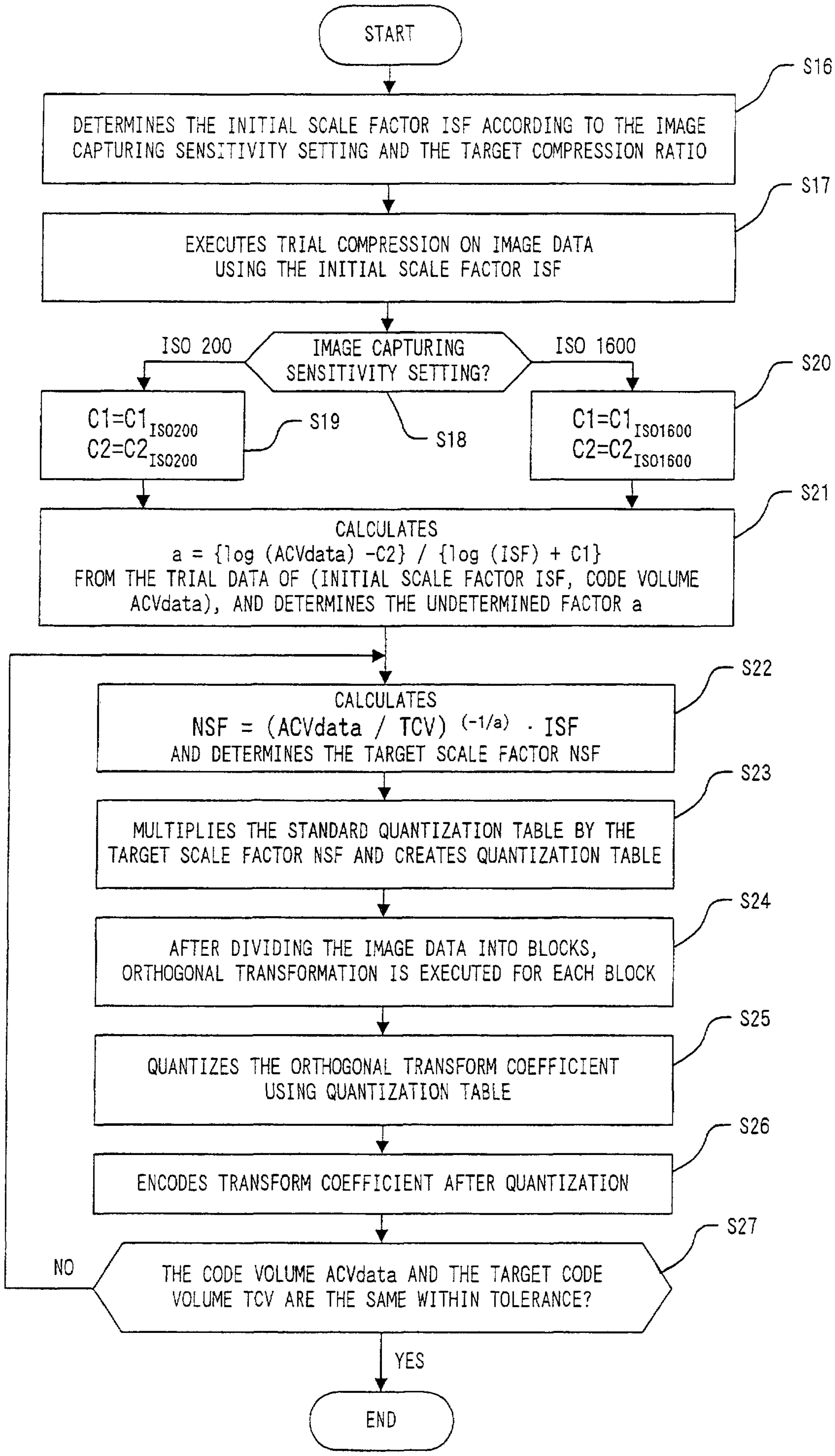
START
S16
DETERMINES THE INITIAL SCALE FACTOR ISF ACCORDING TO THE IMAGE CAPTURING SENSITIVITY SETTING AND THE TARGET COMPRESSION RATIO
S17
EXECUTES TRIAL COMPRESSION ON IMAGE DATA USING THE INITIAL SCALE FACTOR ISF
ISO 200
IMAGE CAPTURING SENSITIVITY SETTING?
ISO 1600
S18
S19
$C1=C1_{ISO200}$
$C2=C2_{ISO200}$
S20
$C1=C1_{ISO1600}$
$C2=C2_{ISO1600}$
S21
CALCULATES
a = {log (ACVdata) -C2} / {log (ISF) + C1}
FROM THE TRIAL DATA OF (INITIAL SCALE FACTOR ISF, CODE VOLUME ACVdata), AND DETERMINES THE UNDETERMINED FACTOR a
S22
CALCULATES
$NSF = (ACVdata / TCV)^{(-1/a)} \cdot ISF$
AND DETERMINES THE TARGET SCALE FACTOR NSF
S23
MULTIPLIES THE STANDARD QUANTIZATION TABLE BY THE TARGET SCALE FACTOR NSF AND CREATES QUANTIZATION TABLE
S24
AFTER DIVIDING THE IMAGE DATA INTO BLOCKS, ORTHOGONAL TRANSFORMATION IS EXECUTED FOR EACH BLOCK
S25
QUANTIZES THE ORTHOGONAL TRANSFORM COEFFICIENT USING QUANTIZATION TABLE
S26
ENCODES TRANSFORM COEFFICIENT AFTER QUANTIZATION
S27
THE CODE VOLUME ACVdata AND THE TARGET CODE VOLUME TCV ARE THE SAME WITHIN TOLERANCE?
NO
YES
END

Fig. 7

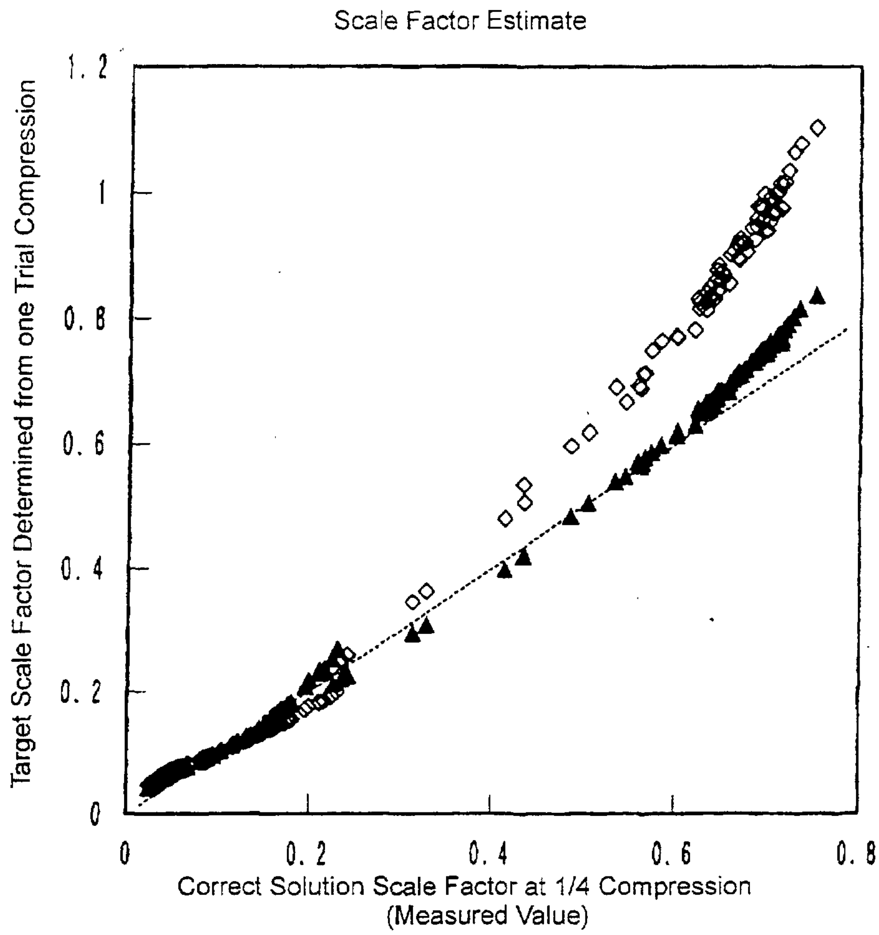


◇ : WHEN IMAGE CAPTURING SENSITIVITY IS NOT CLASSIFIED

▲ : WHEN IMAGE CAPTURING SENSITIVITY IS CLASSIFIED

The dotted line shows the accurate solution line of target scale factor = accurate solution scale factor

Fig. 8

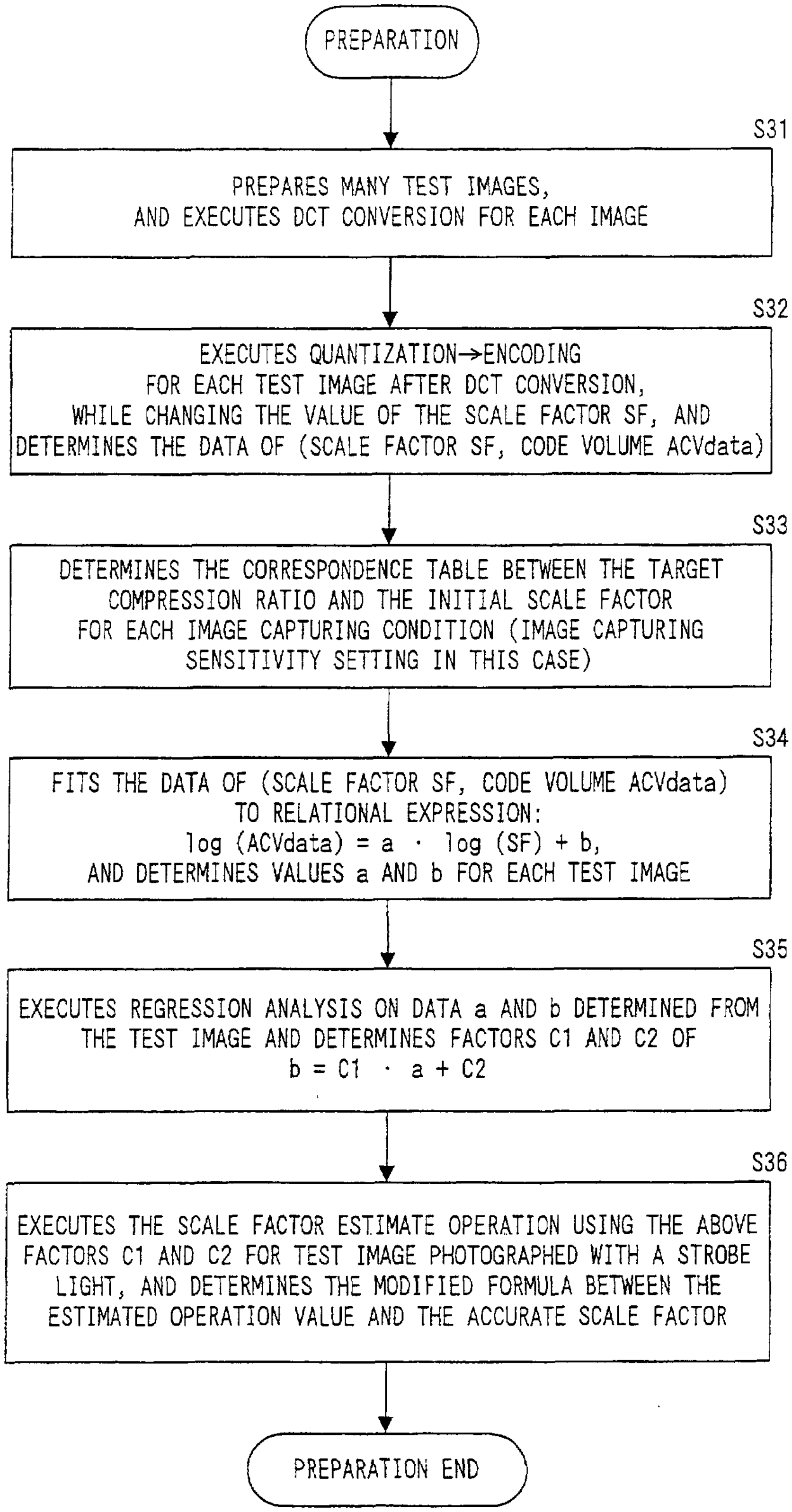
PREPARATION
S31
PREPARES MANY TEST IMAGES, AND EXECUTES DCT CONVERSION FOR EACH IMAGE
S32
EXECUTES QUANTIZATION→ENCODING FOR EACH TEST IMAGE AFTER DCT CONVERSION, WHILE CHANGING THE VALUE OF THE SCALE FACTOR SF, AND DETERMINES THE DATA OF (SCALE FACTOR SF, CODE VOLUME ACVdata)
S33
DETERMINES THE CORRESPONDENCE TABLE BETWEEN THE TARGET COMPRESSION RATIO AND THE INITIAL SCALE FACTOR FOR EACH IMAGE CAPTURING CONDITION (IMAGE CAPTURING SENSITIVITY SETTING IN THIS CASE)
S34
FITS THE DATA OF (SCALE FACTOR SF, CODE VOLUME ACVdata) TO RELATIONAL EXPRESSION: log (ACVdata) = a · log (SF) + b, AND DETERMINES VALUES a AND b FOR EACH TEST IMAGE
S35
EXECUTES REGRESSION ANALYSIS ON DATA a AND b DETERMINED FROM THE TEST IMAGE AND DETERMINES FACTORS C1 AND C2 OF b = C1 · a + C2
S36
EXECUTES THE SCALE FACTOR ESTIMATE OPERATION USING THE ABOVE FACTORS C1 AND C2 FOR TEST IMAGE PHOTOGRAPHED WITH A STROBE LIGHT, AND DETERMINES THE MODIFIED FORMULA BETWEEN THE ESTIMATED OPERATION VALUE AND THE ACCURATE SCALE FACTOR
PREPARATION END

Fig. 9

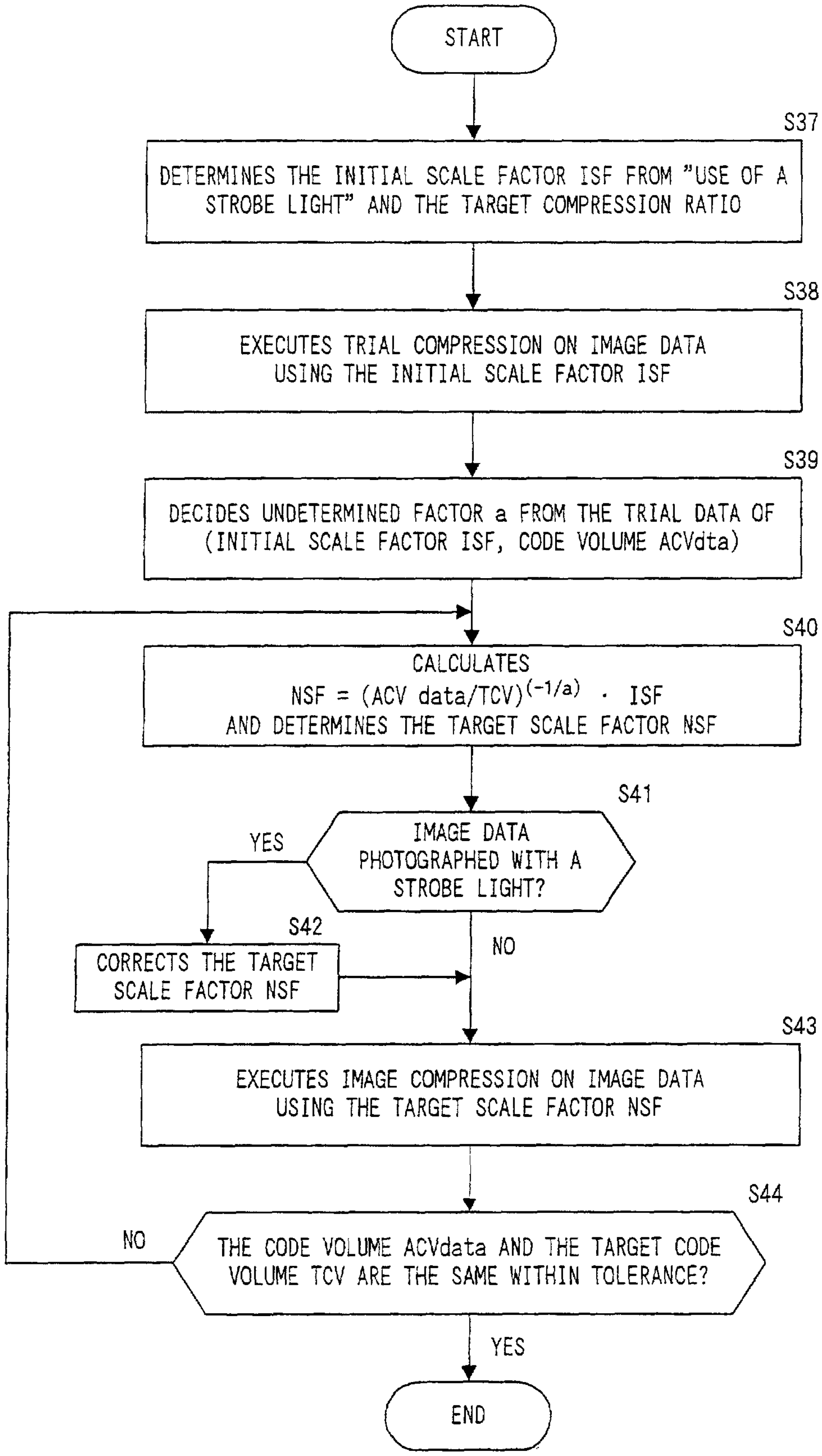
START
S37
DETERMINES THE INITIAL SCALE FACTOR ISF FROM "USE OF A STROBE LIGHT" AND THE TARGET COMPRESSION RATIO
S38
EXECUTES TRIAL COMPRESSION ON IMAGE DATA USING THE INITIAL SCALE FACTOR ISF
S39
DECIDES UNDETERMINED FACTOR a FROM THE TRIAL DATA OF (INITIAL SCALE FACTOR ISF, CODE VOLUME ACVdta)
S40
CALCULATES
NSF = (ACV data/TCV)^(-1/a) · ISF
AND DETERMINES THE TARGET SCALE FACTOR NSF
S41
IMAGE DATA PHOTOGRAPHED WITH A STROBE LIGHT?
YES
S42
CORRECTS THE TARGET SCALE FACTOR NSF
NO
S43
EXECUTES IMAGE COMPRESSION ON IMAGE DATA USING THE TARGET SCALE FACTOR NSF
S44
THE CODE VOLUME ACVdata AND THE TARGET CODE VOLUME TCV ARE THE SAME WITHIN TOLERANCE?
NO
YES
END

Fig. 10

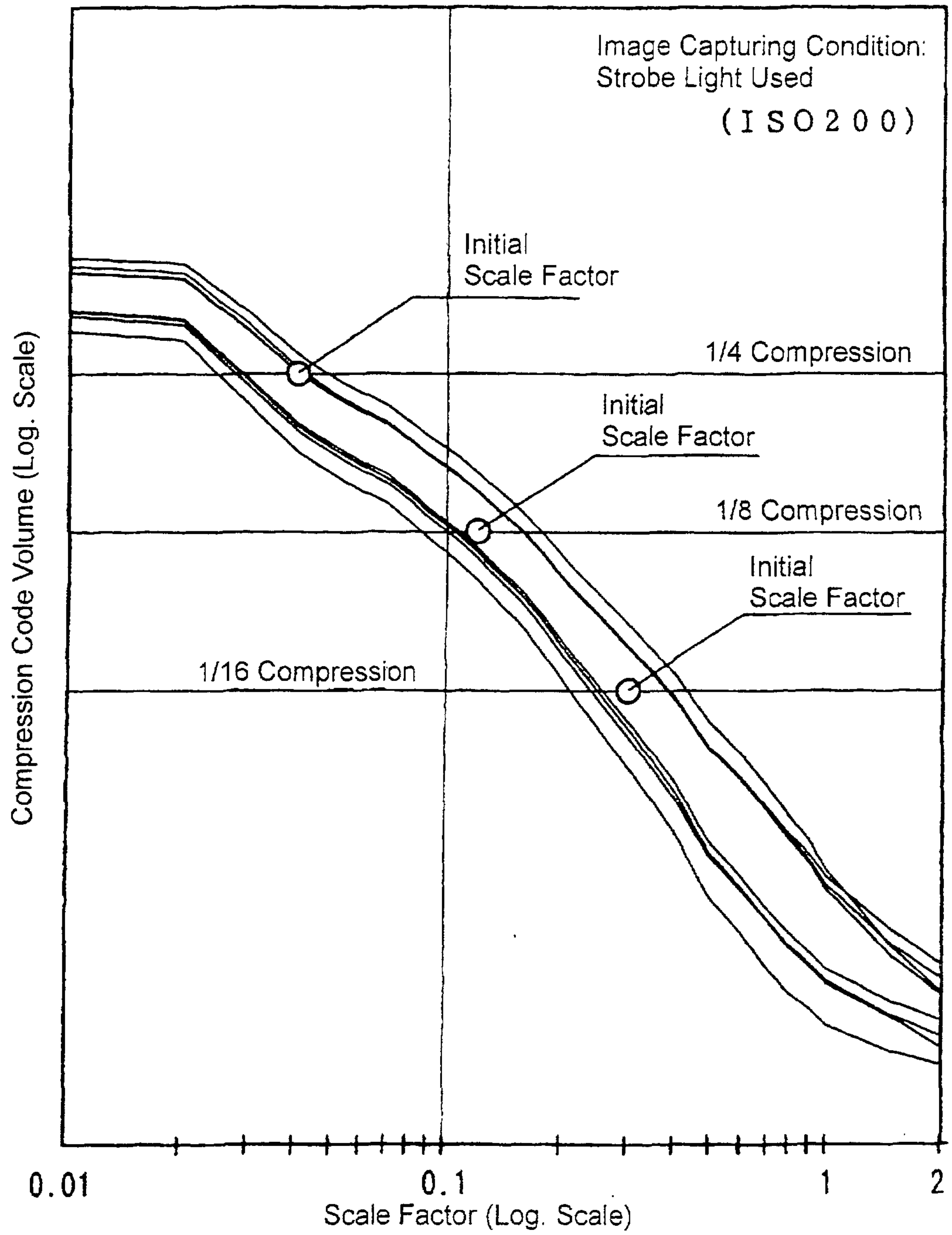
Image Capturing Condition:
Strobe Light Used
(ISO200)
Initial
Scale Factor
1/4 Compression
Initial
Scale Factor
1/8 Compression
Initial
Scale Factor
1/16 Compression
Compression Code Volume (Log. Scale)
0.01
0.1
1
2
Scale Factor (Log. Scale)

Fig. 11

INITIAL SCALE FACTOR

| | | USE OF STROBE LIGHT | |
|---|---|---|---|
| | | STROBE LIGHT NOT USED | STROBE LIGHT USED |
| TARGET COMPRESSION RATIO | 1/4 | 0.1 | 0.04 |
| | 1/8 | 0.3 | 0.12 |
| | 1/16 | 0.7 | 0.3 |

Fig. 12

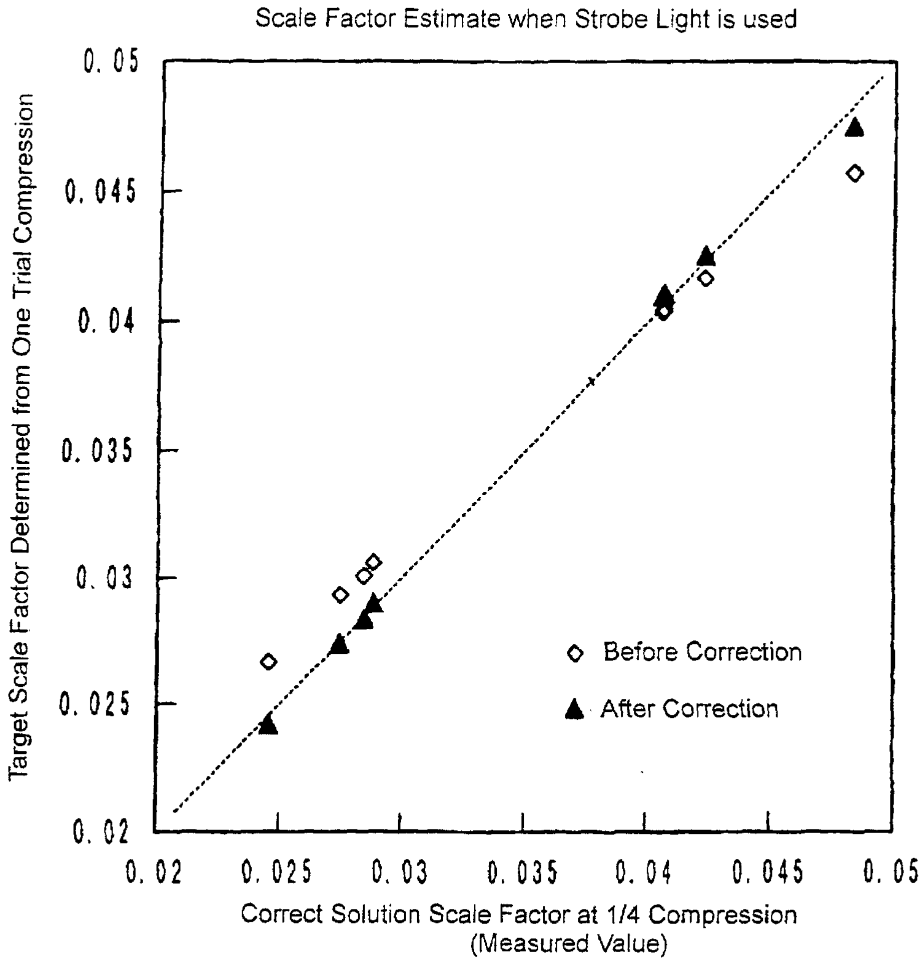


The dotted line shows the accurate solution line of target scale factor = accurate solution scale factor

Fig. 13

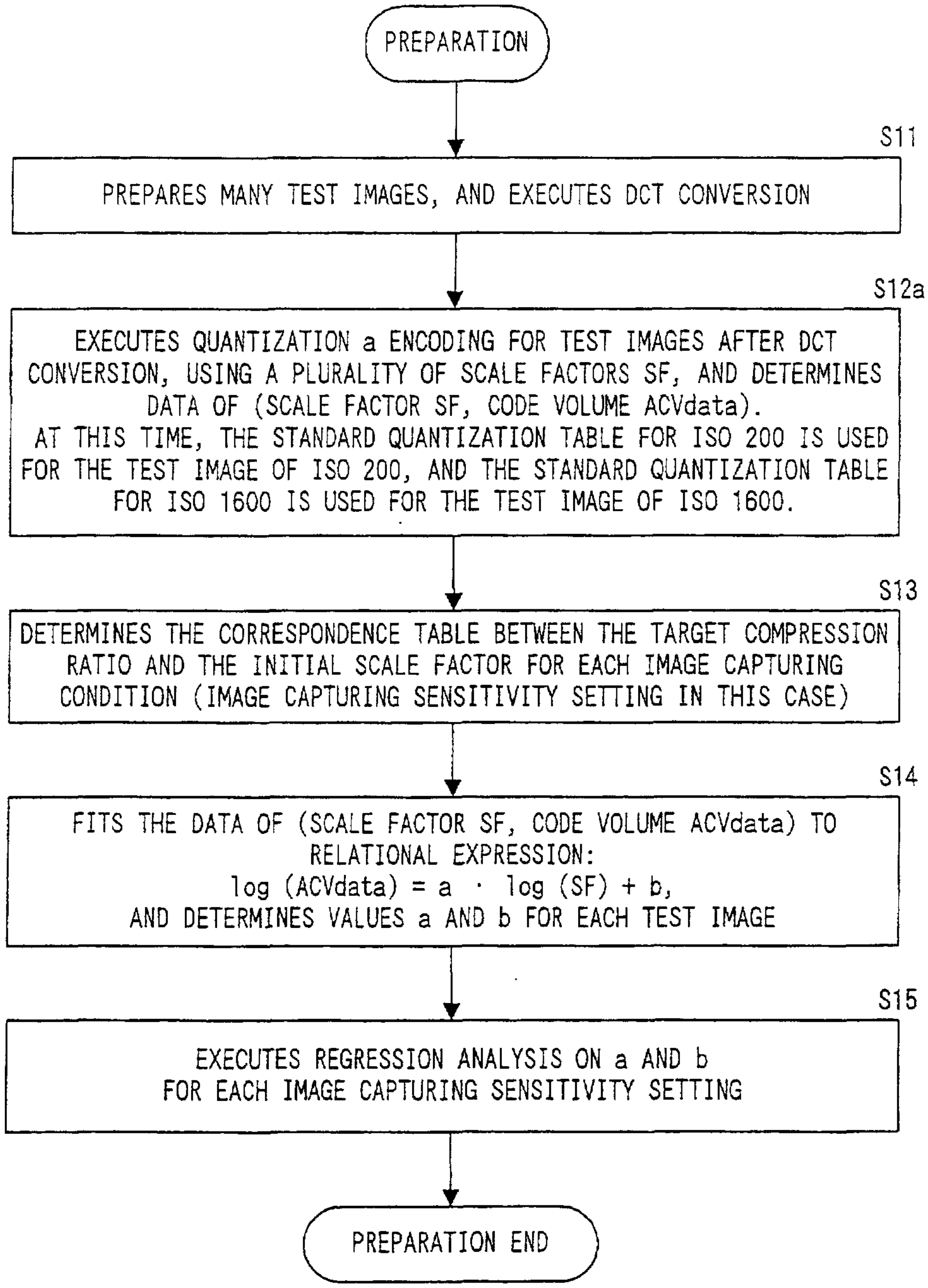
PREPARATION
S11
PREPARES MANY TEST IMAGES, AND EXECUTES DCT CONVERSION
S12a
EXECUTES QUANTIZATION a ENCODING FOR TEST IMAGES AFTER DCT CONVERSION, USING A PLURALITY OF SCALE FACTORS SF, AND DETERMINES DATA OF (SCALE FACTOR SF, CODE VOLUME ACVdata).
AT THIS TIME, THE STANDARD QUANTIZATION TABLE FOR ISO 200 IS USED FOR THE TEST IMAGE OF ISO 200, AND THE STANDARD QUANTIZATION TABLE FOR ISO 1600 IS USED FOR THE TEST IMAGE OF ISO 1600.
S13
DETERMINES THE CORRESPONDENCE TABLE BETWEEN THE TARGET COMPRESSION RATIO AND THE INITIAL SCALE FACTOR FOR EACH IMAGE CAPTURING CONDITION (IMAGE CAPTURING SENSITIVITY SETTING IN THIS CASE)
S14
FITS THE DATA OF (SCALE FACTOR SF, CODE VOLUME ACVdata) TO RELATIONAL EXPRESSION:
log (ACVdata) = a · log (SF) + b,
AND DETERMINES VALUES a AND b FOR EACH TEST IMAGE
S15
EXECUTES REGRESSION ANALYSIS ON a AND b FOR EACH IMAGE CAPTURING SENSITIVITY SETTING
PREPARATION END

Fig. 14

Example of Standard Quantization Table for ISO 200

(a)

| | | | | | | | |
|---|---|---|---|---|---|---|---|
| 16 | 11 | 10 | 16 | 24 | 40 | 51 | 61 |
| 12 | 12 | 14 | 19 | 26 | 58 | 60 | 55 |
| 14 | 13 | 16 | 24 | 40 | 57 | 69 | 56 |
| 14 | 17 | 22 | 29 | 51 | 87 | 80 | 62 |
| 18 | 22 | 37 | 56 | 68 | 109 | 103 | 77 |
| 24 | 35 | 55 | 64 | 81 | 104 | 113 | 92 |
| 49 | 64 | 78 | 87 | 103 | 121 | 120 | 101 |
| 72 | 92 | 95 | 98 | 112 | 100 | 103 | 99 |

Example of Standard Quantization Table for ISO1600

(b)

| | | | | | | | |
|---|---|---|---|---|---|---|---|
| 16 | 11 | 10 | 16 | 24 | 40 | 61 | 91 |
| 12 | 12 | 14 | 19 | 26 | 58 | 72 | 82 |
| 14 | 13 | 16 | 24 | 40 | 57 | 82 | 84 |
| 14 | 17 | 22 | 29 | 51 | 87 | 96 | 93 |
| 18 | 22 | 37 | 56 | 68 | 109 | 123 | 115 |
| 24 | 35 | 55 | 64 | 81 | 104 | 135 | 138 |
| 58 | 76 | 93 | 104 | 123 | 145 | 144 | 151 |
| 108 | 138 | 142 | 147 | 168 | 150 | 154 | 148 |

Fig. 15

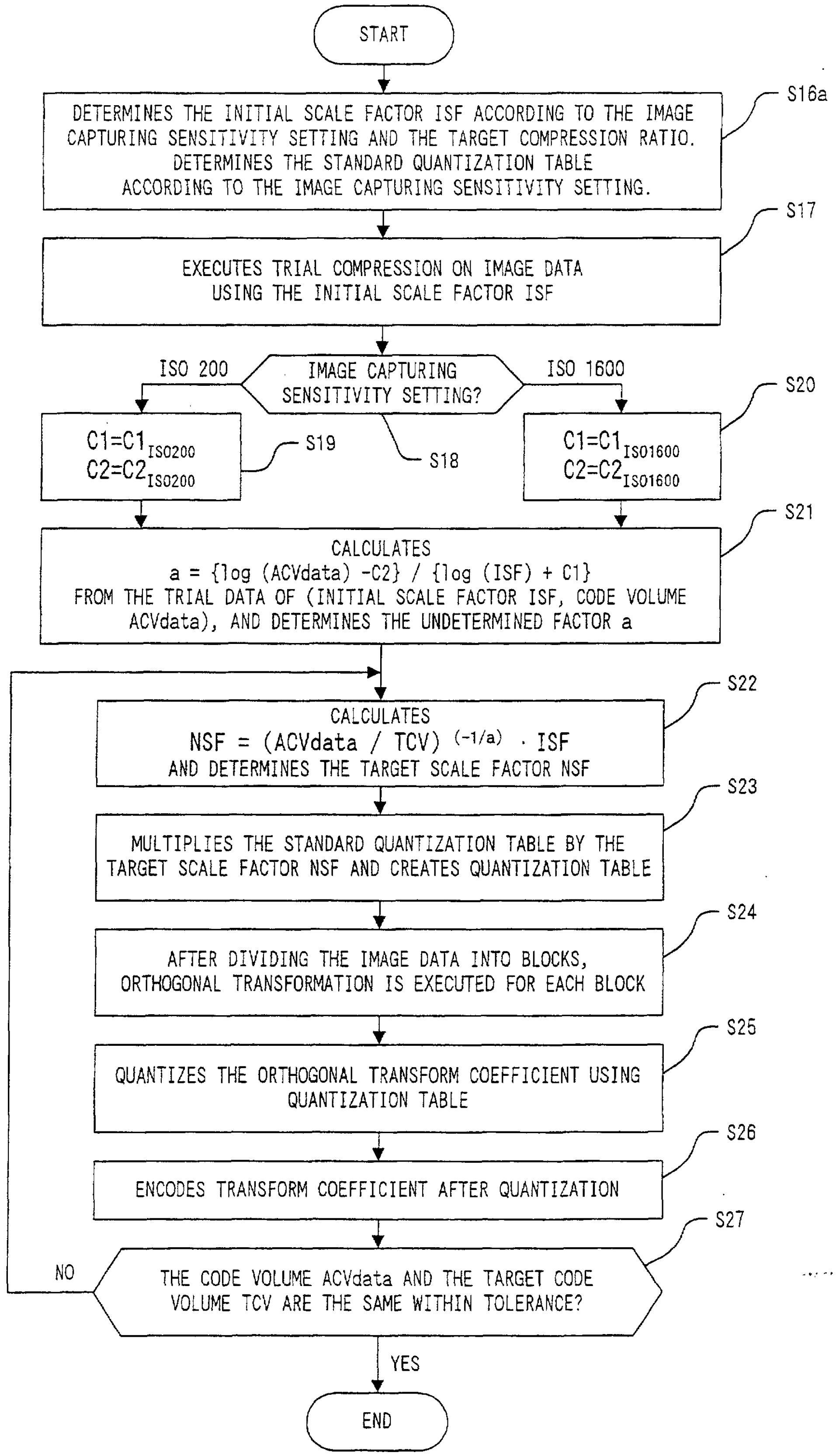
START
DETERMINES THE INITIAL SCALE FACTOR ISF ACCORDING TO THE IMAGE CAPTURING SENSITIVITY SETTING AND THE TARGET COMPRESSION RATIO. DETERMINES THE STANDARD QUANTIZATION TABLE ACCORDING TO THE IMAGE CAPTURING SENSITIVITY SETTING.
S16a
EXECUTES TRIAL COMPRESSION ON IMAGE DATA USING THE INITIAL SCALE FACTOR ISF
S17
IMAGE CAPTURING SENSITIVITY SETTING?
S18
ISO 200
ISO 1600
$C1=C1_{ISO200}$ $C2=C2_{ISO200}$
S19
$C1=C1_{ISO1600}$ $C2=C2_{ISO1600}$
S20
CALCULATES a = {log (ACVdata) -C2} / {log (ISF) + C1} FROM THE TRIAL DATA OF (INITIAL SCALE FACTOR ISF, CODE VOLUME ACVdata), AND DETERMINES THE UNDETERMINED FACTOR a
S21
CALCULATES $NSF = (ACVdata / TCV)^{(-1/a)} \cdot ISF$ AND DETERMINES THE TARGET SCALE FACTOR NSF
S22
MULTIPLIES THE STANDARD QUANTIZATION TABLE BY THE TARGET SCALE FACTOR NSF AND CREATES QUANTIZATION TABLE
S23
AFTER DIVIDING THE IMAGE DATA INTO BLOCKS, ORTHOGONAL TRANSFORMATION IS EXECUTED FOR EACH BLOCK
S24
QUANTIZES THE ORTHOGONAL TRANSFORM COEFFICIENT USING QUANTIZATION TABLE
S25
ENCODES TRANSFORM COEFFICIENT AFTER QUANTIZATION
S26
THE CODE VOLUME ACVdata AND THE TARGET CODE VOLUME TCV ARE THE SAME WITHIN TOLERANCE?
S27
NO
YES
END

Fig. 16

## INTERNATIONAL SEARCH REPORT

International application No.
PCT/JP00/00848

A. CLASSIFICATION OF SUBJECT MATTER
Int.Cl7 H04N7/50, H04N5/232

According to International Patent Classification (IPC) or to both national classification and IPC

B. FIELDS SEARCHED

Minimum documentation searched (classification system followed by classification symbols)
Int.Cl7 H04N7/24-68

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)
JICST(JOIS FILE)

C. DOCUMENTS CONSIDERED TO BE RELEVANT

| Category* | Citation of document, with indication, where appropriate, of the relevant passages | Relevant to claim No. |
|---|---|---|
| X<br>Y | JP, 10-150633, A (Konica Corporation),<br>02 June, 1998 (02.06.98) (Family: none)<br>Claims; Fig. 3 | 1-3<br>4-11 |
| Y | US, 5502485, A (Nikon Corporation),<br>26 March, 1996 (26.03.96),<br>& JP, 7-75056<br>Claims; Fig. 4 | 1-11 |
| Y | JP, 4-333987, A (Canon Inc.),<br>20 November, 1992 (20.11.92) (Family: none)<br>Claims; Fig. 4 | 1-11 |
| Y | US, 5845011, A (Canon Inc.),<br>01 December, 1998 (01.12.98),<br>Claims; Fig. 1<br>& EP, 586218 & JP, 7-67032<br>& DE, 69319810 | 1-11 |
| Y | JP, 9-116802, A (Matsushita Electric Ind. Co., Ltd.),<br>02 May, 1997 (02.05.97) (Family: none)<br>Claims | 1-11 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>06 April, 2000 (06.04.00) | Date of mailing of the international search report<br>25 April, 2000 (25.04.00) |
| Name and mailing address of the ISA/<br>Japanese Patent Office<br><br>Facsimile No. | Authorized officer<br><br>Telephone No. |

Form PCT/ISA/210 (second sheet)(july)

## INTERNATIONAL SEARCH REPORT

International application No.
PCT/JP00/00848

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 11-88825, A (Canon Inc.),<br>30 March, 1999 (30.03.99) (Family: none)<br>Claims; Fig. 4 | 1-11 |

Form PCT/ISA/210 (continuation of second sheet) (July 1992)